(19) Europäisches Patentamt
European Patent Office
Office européen des brevets

(11) EP 0 942 575 A2

(12) EUROPEAN PATENT APPLICATION

(43) Date of publication:
15.09.1999 Bulletin 1999/37

(51) Int Cl.6: H04M 3/50

(21) Application number: 99650025.2

(22) Date of filing: 12.03.1999

(84) Designated Contracting States:
AT BE CH CY DE DK ES FI FR GB GR IE IT LI LU MC NL PT SE
Designated Extension States:
AL LT LV MK RO SI

(30) Priority: 12.03.1998 US 77667 P

(71) Applicant: Novcom N.V.
2343 GW Oegstgeest (NL)

(72) Inventors:
- Almeida, Eric
511, Nashua, NH 03060 (US)
- Behaghel, Thibaut
92100 Boulogne (FR)
- Lobanov, Boris
Minsk (BY)
- Kubashin, Andrei
Minsk (BY)

(74) Representative: McCarthy, Denis Alexis et al
MacLachlan & Donaldson
47 Merrion Square
Dublin 2 (IE)

# (54) Adaptive telephone answering system

(57) The invention in the simplest form is a speech recognition answering system and method that utilizes both a speaker dependent recognizer and a speaker independent recognizer, intended to achieve satisfactory accuracy in the identification of spoken caller and recipient names. The two parallel methods of recognition are used to identify spoken caller names, spoken recipient names, and spoken commands, based on a pre-defined list. Callers are routed according to customized instructions and may be answered, given a personal message, forwarded to another number, forwarded to a pager, or otherwise directed. There is an auto-training means that continues to improve the speech recognition capabilities as names are repeated and added to the list. The accurate speech recognition provides an efficient and user-friendly answering system that can be installed and operated on most existing computer systems.

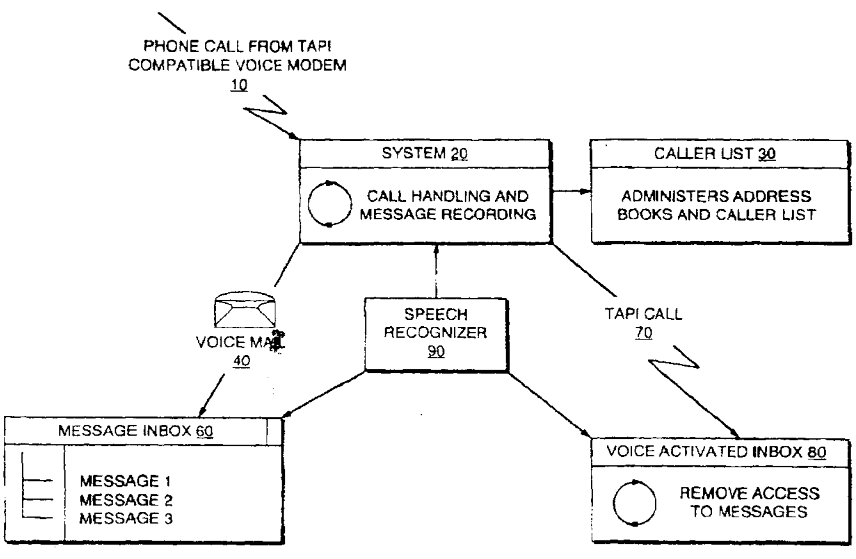


FIG. 1

EP 0 942 575 A2

## Description

CROSS REFERENCE TO RELATED APPLICATIONS

This application claims priority under 35 U.S.C. §119(e) from a U.S. Provisional Patent Application serial number 60/077,667 filed on March 12, 1998, which is incorporated herein by reference for all purposes.

BACKGROUND OF THE INVENTION

FIELD OF THE INVENTION

The present invention relates to a speech recognition answering system, more specifically, an answering system for interacting with a caller using an accurate speech recognition system having parallel speaker dependent and speaker independent recognition.

BACKGROUND ART

Marketing data supports the conclusion that telephone callers dislike impersonal and complex answering systems. Prospective customers that have an unpleasant telephone experience may go elsewhere if they cannot quickly reach the telephoned party. Menu driven system or generic messaging systems do not provide an efficient or personalized interface with a caller. Lost calls translates to lost sales.

One option is to hire a staff of receptionists, where the sole function of the receptionists is to answer phone calls, respond to the caller, and direct the call appropriately. The receptionists would have to keep track of the recipients and maintain an updated list of instructions for each caller. Although this is a personal interface, it is an inefficient and expensive method of solving the telephony problem. Small companies and individuals are unable to take advantage of the costly systems, and resort to other forms of answering and directing telephone traffic.

In some situations, paying qualified staff to answer phones is expensive, and usually not cost-effective on a 24 hour a day, 7 days a week basis. Temporary phone staffing reduces costs, but creates gaps in coverage on off-peak shifts.

Answering services are less expensive, and can be used to fill gaps, but these service personnel do not know the client's business, are not informative, and basically only record messages.

Automated telephone systems have been used to try to eliminate operator interface, obtain full coverage, and reduce overall expenses over a long time period. These systems are generally too expensive to install for small businesses and are used only with larger companies that can afford the initial costs. Various implementations have been attempted, but these systems are expensive to install, operate, and maintain, and are limited in the amount of customization and options available.

Most of these automated systems use dual tone multifrequency (DTMF) tones to access mailboxes or invoke commands within the answering system. Long and complex menu structures are prevalent, and the caller has to slowly progress through each level in order to obtain the desired location or person. And, the caller and potential customer is not generally pleased with the impersonal manner.

Speech recognition has recently been attempted on answering systems, with limited success. The speech recognition facility in conjunction with the answering system adds a personal touch lacking in the earlier DTMF automated systems. In theory, the caller can enter his name and direct the call automatically by voice commands to the appropriate person or department, eliminating long menu commands. The person receiving the call will already know the callers name and caller-specific treatment can be implemented.

These speech recognition systems to date have not been able to effectively apply speech recognition in accordance with identifying the caller and directing the call or following the caller's voice commands.

In U.S. Pat. No. 5,651,055, a telephone answering machine that utilizes speech recognition to identify callers from a pre-defined list of possible callers is disclosed. This invention applies a speaker independent speech recognizer that requires extensive training of the voice recognition system a large number of times in order to obtain adequate accuracy. This is an impractical system, with too much overhead to be successful in the marketplace.

The automated telephone operator system is described in U.S. Patent 5,185,781, whereby commands and announcements are permitted, and the user interfaces to the system through DTMF commands or minimal speech recognition. There is no caller identification or other customized interface as the system is designed for anonymous callers such as operator calls.

U.S. Patent 5,479,941 shows an integrated telephony system that has multiple capabilities, handling call routing and delivery and retrieval of voice mail. The system has limited speech recognition and is not intended to identify callers or otherwise personalize the call based on the callers name recognized by the system.

Commercial products are available that allow customers to develop their own speaker independent vocabulary. But to develop such a vocabulary, a developer needs to collect a database of words drawn from a large number of speakers, for example, approximately 50 to 100 speakers. Speaker independent vocabulary created in such a way produces adequate accuracy if the vocabulary size is small and the words are distinct from one another. For the task of spoken name recognition, such a procedure of speaker independent vocabulary creation is impractical.

Another suggested technique for entering the names is to type the names from a keyboard. But the nature of personal names, particularly in North American English, is such that the pronunciation is often not obvious from the written form. Moreover, names may originate from a wide variety of European, African, Asian or Hispanic backgrounds. This variety, and the corresponding scarcity of suitable training data, make Hidden Markov Model (HMM) and phoneme-based recognizers, by far the most commonly used today, unsuitable for the task of name recognition. Current speaker independent name recognition techniques cannot be practically implemented, and commercial viability is not possible.

Furthermore, the present speech recognition systems suffer from a number of significant drawbacks. The equipment required to run the systems is expensive, the initial costs are prohibitive, the speech recognition provides only limited ability, the training requirements are excessive, the personal customization is difficult or non-existent, and the options available are minimal.

Due to the importance of effectively addressing customer's calls, a caller-friendly, cost-effective and efficient method is required. What is needed is an efficient speech recognition system that can be easily installed with minimal hardware requirements. This system should allow easy methods to modify and tailor the calling patterns and customization. The system should provide automatic training to continually improve the accuracy of recognition. The speech recognition should accurately identify callers and recipients without extensive training, and route calls according to programmed instructions.

SUMMARY OF THE INVENTION

The present invention is a speech recognition adaptive answering system and method of use that utilizes both a speaker dependent recognizer and a speaker independent recognizer, intended to achieve satisfactory accuracy in the identification of spoken caller and recipient names. Two parallel methods of recognition provide optimal speech recognition for the spoken name data, and are used to identify spoken caller names and spoken recipient names, using a pre-defined list of possible callers and a pre-defined list of possible recipients.

A voice-adaptive speaker dependent recognizer identifies a spoken name by comparing it with speaker dependent patterns obtained through the statistical processing of voice-dependent parameters of names pronounced by callers over the telephone.

The speaker independent recognizer identifies a spoken name, if it is recognized as unknown by the adaptive speaker dependent recognizer, by comparing it with the speaker independent patterns obtained through the statistical processing of voice-independent parameters of names pronounced by the user through microphone.

If the caller and recipient are determined to be on the caller and recipient lists, the system permits a number of special actions, such as: playing pre-recorded voice messages to callers, paging the appropriate recipient with a caller's telephone number, and forwarding certain calls to another telephone number designated by the recipient. If the caller and/or recipient are not identified, the system plays a default/standard recorded message. In any event the system allows callers to leave voice messages. When the user returns after an absence, he/she may retrieve the messages. Alternatively the user may retrieve the messages remotely over the telephone.

A further embodiment of this system is to provide a telephone voice-adaptive answering system for use by a single recipient. Under this variant, unlike the multi-recipient system, the stored list of names includes the names of callers only. When calls are received, the caller is asked only for his/her own name, and not for the recipient name. Other functions are similar to the multi-recipient system.

The present invention is a speech recognition answering system that addresses the limitations and difficulties of the existing systems. It is therefore an object of the present invention to provide a cost-effective speech recognition system that is affordable by small businesses and individuals.

A further object of the invention is to present a means of directing callers to specific areas and allow individual treatment and personalized automation. Speaker independent and speaker dependent speech recognition can identify callers and direct them to specific messages, individuals or departments. Callers can issue recognized commands or directions to navigate the caller to the proper location without difficulty. The spoken dialogue is easy to understand and guides even an inexperienced caller to the correct party, voice mail, department, or specific application.

An object of the present invention is to provide a system that is operable with minimum hardware overhead. The present invention is easily installed on a PC and uses standard interfaces to the telephony and audio hardware so that only a PC with voice-enable modem is required for operation.

Another object of the invention is to provide a system that is easily customized. The graphical interface utilized in the present invention allows a user to traverse the menu hierarchy and add, delete, or modify functionality without

detailed knowledge of the underlying software algorithms.

A further object of the invention is to improve upon the present speech recognition characteristics. The present system uses a modified dynamic programming method called Start-Point Free Dynamic Time Warping, a modified Dynamic Time Warping method. This method of resolving speech is that it not only gives an evaluation of word presence in running speech, but also evaluates the timing aspects of the word sequences. Prior systems employed mostly Hidden Markov Model algorithms because Dynamic Time Warping techniques were too complex for the existing hardware. The recent developments in improved speed and capacity allow the present system to operate.

Yet another object of the invention is to allow a user to train the system to recognize and respond to certain callers. The training is performed by using a microphone attached to the computer's sound card, and implemented by a simple graphical interface. The more training, the larger the capacity of recognized callers.

A further object of the invention is to enable users to purchase and update the system with ease. The existing software can be obtained in multiple formats including CD, diskette, and downloadable from the internet. The software operates on Windows operating systems, and updates and patches can be distributed and made available on the Internet.

An additional object is to provide a system that is standardized for the majority of users, and the present invention operates on Microsoft Windows operating system that has full support for each of these standard interfaces.

Yet a further object of the invention is to provide a user-friendly interface. Current voice-mail offerings are expensive and limited in the degree of customization allowed for individual callers. Since most available systems use DTMF tones to access mailboxes, callers can only receive individual treatment by pre-arranging mailbox numbers. The present invention uses standard hardware and employs, in parallel, both speaker independent and speaker dependent speech recognition to identify callers, allowing system users to define specific treatment of callers and change this treatment through a graphical user interface. A spoken dialogue makes the system easy to use for callers who have no experience with voice mail or similar applications.

An additional advantage, apart from relating and receiving messages, the system also offers advanced telephony features such as paging and call forwarding, providing the required services are available to system users. Also, if messages are received, MAPI-compatible messaging is used to send the messages to the system message database, where they may be viewed together with Emails and faxes received in the system Inbox.

An additional object of the invention is a speech recognition answering system for interacting with a caller, comprising a voice generator for communicating with the caller, wherein the voice generator prompts the caller for a spoken name. A voice recorder is provided for recording the spoken name. There is a programmable list of names stored on a memory means, along with a programmable set of instructions, a set of speaker dependent patterns, and a set of speaker independent patterns. The speaker dependent recognizer processes the spoken name to produce a set of caller dependent patterns, wherein the set of caller dependent patterns are compared with the set of speaker dependent patterns for identification. If no identification is possible, a speaker independent recognizer processes the spoken name to produce a set of caller independent patterns, wherein the set of caller independent patterns are compared with the set of speaker independent patterns for identification. Upon successful identification, an outgoing call handler directs the call according to the set of instructions.

The spoken name can be a whole name, first and last name separately, or a command. The name can be a caller name, a recipient name, or both. The invention allows a user to use spoken commands to retrieve messages and enter new or change caller directions. As for the interface, the system is designed for telephone interconnection, but the embodiment covers other interfaces, including Internet (Internet telephony), Intranet, wireless, and other computer interconnections. A further object includes the system as a single recipient system, where only the caller input is desired.

A further object is a speech recognition answering system further comprising a means of speaker dependent training, wherein the means comprises the steps of selecting an optimal sample from the set of speaker dependent patterns, correcting for an erroneous sample, and adding the caller dependent patterns to the set of speaker dependent patterns upon identification.

And an additional object is a speech recognition answering system further comprising a means of speaker independent training, wherein the means comprises the steps of inputting a name, processing the name to produce a set of name independent patterns, and adding the name independent patterns to the set of speaker independent patterns. The inputting means includes typing and microphone recording.

Another object is a speech recognition answering system wherein the speaker independent recognizer comprises a voice-independent parameters analyzer, a processing means for producing the caller independent patterns, a storage means for storing the set of speaker independent patterns, a means for comparing the caller independent patterns with the speaker independent patterns, and a means for identifying the caller.

And yet a further object is a speech recognition answering system wherein the speaker dependent recognizer comprises a voice-dependent parameters analyzer, a processing means for producing the caller dependent patterns, a storage means for storing the set of speaker dependent patterns, a means for comparing the caller dependent patterns

with the speaker dependent patterns, and a means for identifying the caller.

Another object is a speech recognition answering system wherein the speaker independent recognizer processes the spoken name using formant analysis and wherein the speaker dependent recognizer processes the spoken name using spectral analysis.

And another object is a speech recognition answering system wherein the means for comparing the spoken caller name with speaker dependent patterns is through modified dynamic time warping techniques. There is a further object where the means for comparing the spoken caller name with speaker independent patterns is through modified dynamic time warping techniques.

And a further object is a speech recognition answering system wherein the speaker dependent recognizer is used for caller authentication. This provides a security means that can be easily implemented by tightening the distance parameters.

Yet a further object is a speech recognition answering system wherein the outgoing call handler forwards the call to another telephone number designated by the set of instructions. The outgoing call handler can also page another telephone number, play a customized message or otherwise interface with the caller according to the instructions.

An object of the invention is a speech recognition answering system for interacting with a caller, comprising a voice generator to prompt the caller for a spoken name. A means for recording the spoken name, and a means for recording a caller voice message. There is a call list stored on a memory means, wherein the call list contains caller speech patterns and caller instructions for a plurality of callers. The speaker dependent recognizer compares the spoken name to a speaker dependent pattern, wherein the speaker dependent pattern is obtained through statistical processing of voice-dependent parameters of the caller speech patterns. A speaker independent recognizer compares the spoken caller name to a speaker independent pattern, wherein the speaker dependent pattern is obtained through statistical processing of voice-independent parameters of the caller speech patterns. There is a voice player for playing the spoken name and the caller voice message, and an incoming call voice player which plays a stored voice message to the caller. The outgoing call handler processes the call according to the caller instructions; and a system controller is used for synchronizing and switching.

And a further object is a method of answering calls, comprising the steps of accepting a call, prompting said caller to input a spoken name, recording the spoken name, and processing the spoken name to produce a set of caller patterns. Once the caller patterns are produced, the further steps include comparing the set of caller patterns to a set of speaker dependent patterns to identify a recognized caller. Then, directing the call according to a set of instructions. The instructions are programmable by the user, and for identified callers can provide customized messages, call-forwarding, and paging options based on the user's instructions. If a caller is unidentified, the system can play a standard message and record the caller's message along with the caller's spoken name. As part of the training methods, the new caller can be added to the system. Finally, the last step is resetting the system when the caller disconnects.

And another object is a method further comprising the steps of comparing the set of caller patterns to a set of speaker dependent patterns to identify a unrecognized caller. Then, comparing the caller patterns to a set of speaker independent patterns to identify the recognized caller.

Finally, a method further comprising the steps of comparing the set of caller patterns to a set of speaker dependent patterns to identify a unrecognized caller. Then comparing the caller patterns to a set of speaker independent patterns to identify the unrecognized caller, playing a standard message to the unrecognized caller, and recording a message from the unrecognized caller.

Speech is identified by its relatively high energy and its modulation nature. The high energy can be represented as a high amplitude and a long duration, whereas the modulation nature is illustrated by comparatively rapid changing of amplitude with the syllable frequency. These characteristics are used to exclude non-speech signals such as short clicks and long stationary noise from the recording.

Since a very small number of word samples, such as first and last name are recorded, the speech signal analysis and parameterization must provide potentially maximal speaker and channel independence. Different types of speech signal analysis, including filter banks, cepstral and formant analysis, were tested, and it was found that formant analysis provided the best results with respect to speaker and channel independence, whereas spectral analysis provided the optimal response for speaker dependent recognition.

The word pattern creation begins with training samples of words that are time-aligned in nonlinear fashion. Quasi-statistical parameters of the word-pattern are then calculated. The advantage of this method is that training is permissible with a minimum of a single word sample.

The algorithm of spoken word resolution and recognition in a running signal is based on an original modified dynamic programming method called Start-Point Free Dynamic Time Warping (SPF DTW). Although the algorithm was developed long ago, it was not used as at the time as it seemed computationally too complex. With modern computer equipment it can however be used successfully. The main advantage of the SPF DTW is that it not only gives an evaluation of the word location in a continuous signal but also evaluates the time of its beginning and end.

The present invention is intended for use on a wide variety of voice modem hardware for which no suitable

calibration is possible. This makes the use of threshold-based methods for rejecting bad recognition candidates difficult to use effectively. Instead, garbage models are mixed with the valid name candidates. The garbage models for first name recognition are made from the last names, and vice versa. If either first or last name candidates are one of the garbage models, or if the first name-last name pair is not valid, the choice is rejected. These two methods proved to be effective in rejecting names not known to the system.

There are two main approaches to speech recognition: pattern-based and phoneme-based. Under the pattern-based approach a Dynamic Time Warping (DTW) method is used for spoken word recognition. For the spoken word the set of the distances between the word and the set of the patterns of words intended for recognition are calculated by means of a DTW-algorithm. The minimum value of the distance indicates the spoken word and this word is recognized if the value is smaller than a given threshold.

Under a phoneme-based approach the Hidden Markov Models (HMM) method is used for spoken word recognition. Within this approach each of the words intended for recognition is represented as a sequence of phonemes (word transcription) and then each of the phonemes as a HMM-structure. For the spoken word the probability of belonging to each of the HMM word model in the set of words intended for recognition is calculated. The maximum value of the probability indicates the spoken word and this word is selected if its value is bigger then a given threshold.

For the task of spoken caller name recognition a pattern-based approach holds certain advantages. Unlike a phoneme-based approach, a pattern-based approach: does not require the exact phoneme transcription of the caller name; does not need large, statistically significant training material to create HMM word models; allows recognition when just one sample of the spoken name is available; allows continuous improvement of spoken names patterns by collecting new samples and using auto-training procedures.

Identification of callers through speech recognition permits a PC telephony system to surpass the traditional limitations of Caller ID or touch-tone entry for caller identification. Not every user subscribes to a Caller ID service. And even for users who do subscribe, it is impossible to establish the identity of every caller through Caller ID. Meanwhile touch-tone entry is also not always an attractive or viable option, because it requires every caller to remember a special code and have a free hand to enter the code at the time of the call. The recognition of a caller's spoken name is natural, quick and reliable means of establishing caller identity.

The present invention identifies spoken names through advanced speech recognition technology. Because proper nouns lack regularity in phonemic transcription and pronunciation, phoneme-based recognition, the kind of speech recognition technology most commonly used, is not well-suited to the task of spoken name recognition. Consequently the present invention employs a pattern-based recognition approach instead of a phoneme-based approach. The spoken name is matched with the set of name models (patterns) by using original modifying dynamic time warping (MDTW) algorithms. The present invention initiates recognition with name models trained by the user by microphone. Later, when the present invention has received at least one sample of a given caller's name, spoken by the caller him/herself, an auto-training procedure starts. The auto-training procedure is ongoing, and allows the present invention to create ever-more-accurate name models.

The present invention is an intelligent system; its name recognition becomes increasingly robust as it receives additional samples of caller names, spoken by the callers themselves. As long as the user follows proper training and correction procedures, recognition accuracy should climb sharply after the initial calls.

Apart from line conditions and caller behavior, certain other factors may affect these expected rates of accuracy. One is the length of caller names. It is more difficult for the present invention to recognize short names---such as Bob, Tom, Don and Bill---than long names---such as Robert, Thomas, Donald and William. Another factor is shared family names; if a number of callers on the caller list share the same family name, a lower rate of correct recognition may result.

The present invention's speech recognition technology has built-in mechanisms designed to avoid mistakes. However, if a given caller list contains callers who share the same last name, e.g. from the same family, and who also have first names that sound similar---such as Ron and Don, or June and Jane---occasional mis-recognition may occur. When this happens, and to minimize the likelihood of recurrence, the user can follow caller correction procedures to extract a bad speech sample from the set.

Other objects, features and advantages are apparent from description in conjunction with the accompanying claims, drawings and specification.

BRIEF DESCRIPTION OF THE DRAWINGS

FIG. 1 is a basic block diagram of the telephone voice-adaptive answering system showing the various interfaces;
FIG. 2 is a detailed block diagram of the telephone voice-adaptive answering system;
FIG. 3 is a flowchart of system set-up;

FIG. 4 is a flowchart of incoming call processing;
FIG. 5 is a flowchart of incoming call list browsing; and
FIG. 6 is a block diagram showing the parallel processing paths.

## DESCRIPTION OF THE PREFERRED EMBODIMENT

In the basic block diagram of FIG. 1, phone calls are detected by the TAPI compatible voice modem 10, and answered by the system 20. The system 20 provides the initial interface, prompts the caller for a spoken name, and routes the call depending on several factors. The speech recognizer 90 creates speech patterns for the caller, records those pattern, and compares those patterns to previously recorded patterns. The recognizer 90 tries to identify a caller from the speech patterns and routes calls depending on the set of caller instructions. A call may be answered by the user, transferred to a different location, or the caller may leave a voice mail message 40. These options are configured using the caller list 30, a configuration tool started from the System 20. If a caller leaves a message, it is recorded as voice mail 40, and sent to the message inbox 60, where it can be viewed later by the user.

If a system user calls and inputs certain verbal or DTMF commands to the system 20, the user can remotely access the Voice Activated Inbox 80 which allows access to phone messages in the Message Inbox 60. All the system components make use of the Speech Recognizer 90 which tries to identify each caller using speech recognition prior to routing call The System 20, Caller List 30 and Inbox 80 have user interface components.

A typical implementation of the present invention in more detail is shown in FIG. 2, in which user interface 100 and telephone line 101 are connected to conjunctor 102. The conjunctor 102 is represented by telephone modem 103, digital/analog converter 104, analog/digital converter 105, keyboard adapter 106 and display adapter 107. Block 102 represents the conjunction of user interface 100 and other blocks of the System 20.

Telephone modem 103 carries out basic telephone functions, including transmission/receipt of audio and ringing signals to/from the telephone line 101, as well as out-bound dialing. Typically a standard telephone 150 will be connected to the telephone modem 103. The telephone modem 103 also converts analog speech to digital and vice-versa. The interface means also encompasses the Internet, including Internet telephony. Digital/analog converter 104 represents conversion of digital speech from voice player 110 to analog speech, so that recipient and caller names can be played over the user's loudspeakers 152. Analog/digital converter 105 represents conversion of analog speech from the user's microphone 154 to digital speech, for recording by voice recorder 111. Recorder 111 records the names of recipients and callers, as well as voice messages for specific callers. The purpose of the keyboard 156 is to provide an additional interface for inputting data via the keyboard adapter 106. The display 158 is used to display the various screens to the user, where the display screen 158 will usually be a computer monitor. The interface between the System 20 and the display is the display adapter 107.

Telephone modem 103 is connected to: voice prompts generator 109, outgoing call handler 108, incoming call voice recorder 114, incoming call voice player 115, adaptive speaker dependent recognizer 116, and speaker independent recognizer 117. Voice prompts generator 109 prompts each caller for caller and recipient names, for purposes of identification. Identification then permits special caller actions, such as, personalized greetings, personalized messages, prompting recipient of caller identity, and similar functions.

In the preferred embodiment, outgoing call handler 108 pages the recipient with the caller's telephone number, forwards calls to another telephone number, forwards a pager message, or plays specific messages---pre-recorded by the recipient----to individual callers. Incoming call voice recorder 114 records recipient and caller names, pronounced by the caller, as well as messages which callers leave for recipients. Incoming call voice player 115 plays voice messages of recipients to callers, or a default message if a caller is not found on the caller list.

Adaptive speaker dependent recognizer 116 performs caller and recipient identification based on spoken names, by comparing them with a series of speaker dependent patterns. Speaker dependent patterns are obtained through the statistical processing of voice-dependent parameters of spoken names, pronounced by callers and recorded by the voice recorder 111. This is achieved when adaptive speaker dependent recognizer 116 connects the voice dependent parameter analyzer 118 with incoming call voice recorder 114, which has previously recorded recipient and caller names from telephone line 101.

Adaptive speaker dependent recognizer 116 and speaker independent recognizer 117 consist of sequences of blocks, which are similar in purpose but not always identical. Pattern memory block 120 and 125 are identical, as are MDTW comparators 121 and 126, and name identificator 122 and name and command identificator 127. The parameters analyzers 118 and 123 are not identical; and the trainers 119 and 124 are also not identical.

Adaptive speaker dependent recognizer 116 comprises voice-dependent parameters analyzer 118, names adaptive trainer 119, patterns memory 120, Modified Dynamic Time Warping (MDTW) comparator 121, caller and name indentificator 122.

Voice-dependent parameters analyzer 118 produces, from a speech signal, a set of voice-dependent parameters that are normalized against channel variability only. In contrast, voice-independent parameters analyzer 123 is

intended to produce, from a speech signal, a set of voice-independent parameters that are normalized against the speaker's voice as well as channel variability. Voice-dependent parameters analyzer 118 is based on the channel variability normalized spectrum analysis, whereas voice-independent parameters analyzer 123 is based upon speaker voice and channel variability normalized formant analysis.

Formant analysis involves the extraction of the formant frequencies (F1, F2) and the formant amplitudes (A1, A2) as functions of time. These formant parameters and their corresponding first derivatives are taken as the input for name recognition. A normalization procedure compensates for different voice variations. Of the different types of speech signal analysis, including filter banks, cepstal and formant analysis, formant analysis provided the best speaker and channel independence.

Names adaptive trainer 119 is intended to produce speaker dependent patterns of names and individual thresholds so that the names can be identified. Patterns and thresholds are obtained through the statistical processing of voice-dependent parameters of spoken names, drawn from the list of the names 112 for which identification will be attempted, pronounced by callers over the telephone line.

In contrast, the names and commands trainer 124 produces speaker independent patterns of names and the individual thresholds so that the names can be identified. Patterns and thresholds are obtained through the statistical processing of voice-independent parameters of spoken words from the lists of names and commands for which identification is attempted, pronounced by the user through the microphone 154.

Pattern memories 120 are employed for storage of speaker dependent name patterns. MDTW comparators 121 are employed to compare voice-dependent parameters of spoken names from analyzers 118 with the set of speaker dependent names patterns emanating from memories 120.

The speaker dependent name patterns can be used for authentication or identification purposes in order to provide a secure system. The voice-dependent parameters will vary from one person to the next, and the MDTW comparators can be used to match the voice patterns to provide a level of security. The mathematical algorithm boundaries can be tightened to allow higher security.

One of the advantage of the Modified Dynamic Time Warping (MDTW) algorithm is its robustness in the face of speech anomalies and non-speech sounds (such as breathing, lip smacks etc.).

Names identificator 122 is used to compare the "distances" between spoken names and patterns obtained by MDTW comparators 125 and 130 with the relevant thresholds. If the distance is smaller than the given threshold then the name is matched to one on the list. If the distance is greater than the given threshold, the name is determined to be unknown. If unknown, the system attempts to identify the caller name with the speaker independent recognizer.

Speaker independent recognizer 117 performs caller and recipient identification by comparing spoken names to speaker independent patterns. Speaker independent patterns are obtained by the statistical processing of voice-independent parameters of spoken names pronounced by the user of the system. This is achieved when speaker independent recognizer 117 connects voice independent parameter analyzer 123 with voice recorder 111, which has previously recorded recipient and caller names from the user's microphone 154. Speaker independent recognizer 117 is activated if case names are recognized as unknown by the adaptive speaker dependent recognizer 116, which is interconnected to the speaker independent recognizer 117.

Speaker independent recognizer 117 is also created for gaining remote access to the system, through spoken commands from the user. Both adaptive speaker dependent and speaker independent recognizers are connected with stored list of names to be accepted 112, which contains the names of recipients and callers for whom identification is attempted.

The result of spoken name identification is processed as follows. Incoming call voice player 115 is activated to play voice messages from the appropriate recipient to callers, and a standard/default message if a caller is not found on the caller list. It then activates outgoing call handler 108 for paging the recipient with the caller's telephone number, or forwards the call to another number designated by the user. The results of name identification for a certain period of time are stored in incoming call list 113, including the names of recipients and callers, time of each call, and indication of messages left.

Speaker independent recognizer 117 comprises voice-independent parameters analyzer 123, names and commands trainer 124, patterns memory 125, MDTW comparator 126, and name or command identificator 127.

Voice-independent parameters analyzer 123 is intended to produce, from a speech signal, a set of voice-independent parameters that are normalized against the speaker's voice as well as channel variability. Voice-independent parameters analyzer 123 is based upon speaker voice and channel variability normalized formant analysis.

Names and commands trainer 124 produces speaker independent patterns of names and the individual thresholds so that the names can be identified. Patterns and thresholds are obtained through the statistical processing of voice-independent parameters of spoken words from the lists of names and commands for which identification is attempted, pronounced by the user through the microphone 154.

Patterns memory 125 are employed for storage of speaker independent names patterns. MDTW comparator 126 is employed to compare voice-independent parameters of spoken names from analyzer 123 with the set of speaker

independent names patterns emanating from memory 125.

Name or command identificator 127 is used to compare the distances between spoken names and patterns obtained by MDTW comparator 126 with the relevant thresholds. If the distance is smaller then the given threshold then the name is matched to one on the list. If not, the name is determined to be unknown.

System controller 128 is connected to all blocks of the answering system and effects regimes for synchronizing and switching.

Flow charts illustrate typical sequences of operations, under the single-recipient embodiment of the system, and are shown in FIG.'s 3 - FIG. 5. There are three typical working regimes of the system: system dispositions, incoming call processing, and incoming call list browsing.

A flow chart that illustrates the user set-up features is shown in FIG. 3. As part of the system programming, the user enters the caller's name 200 in the list of callers whom he/she wishes to identify, and the caller's properties (telephone number, address, etc...). The user then speaks the caller's first and last names 201 into a microphone. In the preferred embodiment, the user speaks the caller's first and last names a minimum of two times for a adequate sampling. These speech signal samples of the spoken names are recorded by the system, and speaker independent spoken name patterns are created for these samples.

A message block 203 provides a programmable system branch if the user wants to leave a personalized or standard/default message for the caller. If the user wants to leave a default message for caller, the system allows the user to record a default message 210. If the caller does not want to leave a standard message, the user records a specific personalized message for the caller. Next, the user decides whether to configure a paging action for a caller. If the user wants the paging option invoked 206, the user enters the paging number and the system transmits the caller's telephone number to the user. If the user does not want to utilize the paging option for a caller 205, the system progresses to the next step. Call forwarding 207 is the next user option, and the user decides whether the caller should be forwarded to another number. If the user decided to forward the caller, the user enters the telephone number 208 to which the call should be forwarded. Otherwise, the user can skip the call forwarding and go to the next block 209. If the user decides to add a next caller 209 to the caller list, then the sequence is repeated, otherwise the user can end the caller sequence 211.

A flow chart illustrating incoming call processing is shown in FIG. 4. Once an incoming call is accepted, a greeting and prompt 300 is presented to the caller. A typical prompt for example, "Say your name, please" is presented to the caller. The caller speaks his/her name 301, either first name, last name, or both depending on the prompt. The speech recognition system employed in the present invention allows whole words, such as both first and last name, to be processed and recognized. A sample of the caller's spoken name is recorded 302. Next, an announcement such as "Call from <caller name>" is transmitted to the user, through speakers in the preferred embodiment. If the user picks up a local handset 304, then the conversation is allowed to proceed, where the user already knows the callers name and can be prepared. Once the conversation ends and the caller hangs up, the answering system is reset to await another incoming call.

Additionally, the caller can be prompted for the recipient's name if there is no specific instruction for the caller or the caller is not recognized. The recipient name will undergo speech recognition and attempt to match the caller's spoken recipient name to a recipient name list. If a match occurs, the call is processed accordingly, and the recipient caller list is automatically updated with the additional speech sample.

If the call is not picked up, speaker dependent caller name recognition 305 is commenced. If a speaker dependent recognizer identifies the caller's name, speech samples for the caller name are collected 309 for the creation of speaker dependent caller name patterns by the name-adaptive trainer. Pursuant to user instructions, the desired message is delivered to the caller 310. A standard or personalized voice message is played to the caller, according to the set-up as detailed in FIG. 3. A message is recorded from the caller 311. Optional paging 312 and call forwarding 313 are provided for, based on the user set-up instructions for the caller as previously detailed in FIG. 3. Once the called party hangs up, the answering system is reset to await another incoming call.

If the speaker dependent recognizer does not identify the caller's name 306, then the speaker independent caller name recognition 307 is performed. If the speaker independent recognizer 307 recognizes the caller's name, speech samples for the caller name are collected 309 for the creation of speaker dependent caller name patterns by the name-adaptive trainer. Pursuant to user instructions, the desired message is delivered to the caller 310. A standard or personalized voice message is played to the caller, according to the set-up as detailed in FIG. 3. A message is recorded from the caller 311. Optional paging 312 and call forwarding 313 are provided. Once the party hangs up, the answering system is reset to await another incoming call.

If the speaker independent recognizer does not identify the caller's name, then a standard voice message is played to the caller 314, and a message from the caller is recorded 315. Once the party hangs up, the answering system is reset to await another incoming call.

A flowchart that illustrates browsing of the incoming call list is shown in FIG. 5. This working regime is used when the user has been out of home or office for a certain time and he/she checks messages received by the system

during his/her absence. Another function of this working regime, is to provide additional name speech samples for adaptive training of caller names.

The user opens the first message 400 in the incoming call list, and plays the recorded caller name with the message left by the caller 401. The system then attempts to identify the caller 402. If the caller is identified by the system, the user determines whether the caller is correctly recognized 403. If the caller is properly identified, this name speech sample is added to the other samples for adaptive training 408 of the relevant caller name. The next message can then be retrieved 409.

If the caller is not recognized correctly, the user selects the correct caller from the caller list 407, and the speech sample is added to the other samples for adaptive training 408 for that caller. The routine prompts the user for the next message 409.

If the caller is not recognized by the system 402, the user tries to select the caller from the caller list 404. If the caller is in the caller list, the user selects the caller 407, and the speech sample is added to the other samples for adaptive training 408 for that caller. The routine prompts the user for the next message 409.

If the caller is not in the caller list, the user determines if the call is expected 405 and should be added to the caller list. If the caller is not expected and the user does not want to add the caller to the caller list, the routine prompts the user for the next message 409. If the caller is not on the list, but the user wants to add the caller to the caller list, 406, the user follows the system disposition as shown in FIG. 3, and the speech sample is added to other samples for adaptive training 408 for that caller. The routine prompts the user for the next message 409.

If there are no other messages or the user does not want to continue browsing, the session concludes. If the user wants to continue browsing, the incoming call list is continued from the beginning.

FIG. 6 shows a block diagram representation of the speech signal processing. The speech from the telephone signal 500 or a computer microphone signal 510 travels first to the speech signal analysis and parameterization block 520. The telephone and microphone sets of the speech signal parameters are then processed. The set of microphone speech parameters 610 is used for the creation of the set of speaker independent, caller-name microphone patterns intended for training, while the set of telephone speech parameters 530 is used for the creation of a set of speaker dependent, caller name telephone patterns intended for training, and, also for spoken caller names telephone-and microphone-based recognition.

The telephone speech parameters 530 are next processed by telephone training 540. For the creation of the set of speaker dependent, telephone-generated caller name patterns the procedure of semi-automatic collection 550 of telephone speech parameters 530 is utilized. Also, for the creation of the set of speaker dependent, telephone-generated caller name patterns 570, an auto-training procedure 560 is used. Telephone-and microphone-based recognition 580, 640 both use original modifying dynamic time warping (DTW) methods.

During the dialogue for an incoming call, if no other caller identification methods have been deployed, the caller is asked for his/her first name, then last name. Then an attempt is made at caller recognition, and independent from the recognition result, caller name recordings are stored, along with the caller's message, to be used for telephone training.

Telephone training 540 is a procedure for the creation of individual patterns 570 for each caller name, based on samples from the caller's voice recorded over the telephone, to increase recognition accuracy over time, taking into account variations in the caller's voice characteristics. So for each name as many telephone patterns 570 are created as there are callers in the present invention caller list 650. Also, to decrease the risk of creating a bad telephone pattern 570 (from noisy or damaged recordings), and to adapt to different name pronunciations, a personal database of speech parameters (training pack) from name recordings is collected for each caller, to select only name samples of acceptable quality for telephone pattern creation.

The user participates in telephone training 570 -- often unconsciously-- simply by listening to messages. When the user opens a new message, the present invention plays, at first, the caller name recorded during the call, then the message. At this moment the user evaluates the recognition result. If the result is correct, the user closes the message, and the name sample is automatically applied to the recognition model for that caller. If the result is incorrect, the user checks a box in the message player window and follows a correction procedure under which he assigns the name sample to the appropriate caller. Both outcomes are important, because the present invention allots speech parameters, based on the user's intervention or lack thereof, obtained from name samples to training packs of the first and last names of the caller indicated in the message. The system then executes an auto-training procedure 560 - a procedure of telephone pattern creation.

To correct recognition errors and to move speech parameters to the proper name training packs, the user can reassign a caller to a message, but recognition accuracy depends very much on application of new samples to the appropriate models under the procedure described above.

In cases of proper recognition the user should take no special action. W hen 'correct acceptance' occurs, the present invention appends new speech parameters to certain training packs and recalculates corresponding telephone patterns. The same happens in the case of 'correct rejection' of'unknown desirable' caller if the user, at the time he

listens to a message, has registered a new caller in the present invention phone book, who was not recognized but is expected to call later. In cases of'proper rejection' for 'unknown strange' caller name samples are ignored.

In cases of incorrect recognition, the user can easily reassign name samples to another caller by selecting the correct caller from the caller list 650. Then the present invention moves the corresponding speech parameters to the proper training packs and recalculates the telephone patterns.

With respect to the caller name decision block 590, caller recognition is conducted on the basis of separate recognition of first and last names, or on a whole name, following an analysis of the results, leading to a final decision 590. After speech signals of caller's names are received and corresponding sets of speech parameters 530are created, caller recognition is conducted in one or, if necessary, in two stages. During the first stage an attempt at caller recognition is made, through the use of telephone patterns 570. In this case, after separate recognition actions for first and last names or both, all possibilities for first and last names are considered separately, drawn from caller names on the Caller List 650 for which telephone training has occurred. An optimized comparison of the received set of parameters and each of the phone patterns is performed, name by name, by the method of dynamic programming. Each distance is compared with the individual threshold for the corresponding pattern. If the threshold exceeds the maximum distance, the name is not included on the list of acceptable possibilities. Finally among the possible names and surnames a pair is chosen which corresponds to a caller in the Caller List 650, under the condition that the chosen telephone-based patterns of caller names are received from the same caller as a result of telephone training. If no such matching is found an attempt is made at microphone recognition 640.

Microphone recognition 640 is more straightforward than telephone recognition 580. Microphone pattern 630 selections are created for all first and last names, separately or combined, when registration of callers in the user's Caller List 650 is performed. Name by name, an optimized comparison is made for each caller name parameter set and microphone patterns 630 are created for each name through the dynamic programming method described herein.

To check the adequacy of the patterns for purposes of recognition, so-called "anti-patterns" are temporarily created from the best N according to the results of comparison of first name patterns, last name patterns, or combined first and last name patterns. (The first and last name match can be from the separate spoken names or the individual spoken names). The corresponding sets of parameters are also compared with "anti-patterns". A caller recognition result is considered satisfactory, if among the best N, according to the comparison of possible caller names, a first and last name match emerges which corresponds to a name registered in the Caller List, and, if neither the first name, the last name or the combined name distance from the pattern and to the corresponding "anti-pattern" does not exceed the preset value Kg, and the sum of the distance to the patterns of first/last names is the smallest among the possible first name/last name pairs at depth N.

Since it is expected that calls will be received from callers not known to the system, and it is not practical to train all possible names, a rejection technique for unknown caller names is employed during recognition. Also, the invention is intended for use on a wide variety of voice modem hardware where no suitable calibration is possible.

The use of threshold-based rejection methods for microphone-based recognition is not effective because of problems stemming from the variety of signal source parameters and the variety of characteristics in the voices of individual callers, as already described. But for telephone-based recognition threshold-based rejection methods are effective, because thresholds are specific to each caller and calculated according to a constantly growing, self-optimizing database of speech parameters. On the other hand, for microphone-based recognition the use of garbage models for purposes of speaker independent recognition is more effective. So the parallel deployment of speaker dependent and speaker independent recognition using these two methods is the most appropriate for rejecting names not known to the system.

An additional embodiment of the present invention encompasses the caller ID processing. Incoming calls are handled differently depending on whether or not the caller ID signal is available. If the caller ID signal is detected on an incoming call, the present invention first tries to match the number to a caller before proceeding with the dialogue. If it is detected, and the present invention is configured to use it, this information is displayed before answering the call, and some of the dialogue stages may be skipped.

Caller ID identification proceeds if enabled and paid for by the user and for callers whose phone number is detected and matches a number in the caller list. If no caller is matched, or the match is ambiguous (two or more callers match the caller ID number), the dialogue starts from the greeting message and proceeds as discussed herein. If only one caller matches the Caller ID info, a shorter greeting message is played, caller identification is skipped and the action for the caller is executed.

The present invention also allows user interaction with the system from a remote site through DTMF tones that represent different commands. If a DTMF tone is entered during either greeting message, the DTMF shortcut sequence is started. Shortcuts can be entered by typing a DTMF digit during any of the initial messages or during any recognition stage. The dialogue then proceeds to one of the DTMF routines. A number entered 0-9 is assumed to be the start of the caller's access code, and cuts into the action shortcut. If less than four digits are entered, and the entry of the code is timed out, the dialogue continues from where it left off. A *(star) cuts to remote access password entry.

Once the caller has been identified by the caller codes, the appropriate action is executed. Voice commands are another interface option, where the verbal commands are analyzed by the speech recognition system. The system can respond to verbal commands that match the preset commands.

If the caller enters remote access DTMF shortcut, the caller is assumed to be the user of the system. A dialogue proceeds, in which the caller is first asked for a remote access DTMF code. If the code does not match, a message informs the caller that they cannot access the message database, and returns to the start of the call dialogue. If the code is accepted, the system informs the caller how many messages have arrived since the last session. The caller may enter one of a number of DTMF commands, such as "list messages" to hear a summary of the new messages or "play message" to play the message selected. To make the dialogue easier and more intuitive, the caller may enter a number of spoken commands instead of DTMF ones, such as "play message" to play the message selected. The caller hangs up to terminate the remote access dialogue.

As an example of one embodiment, the present invention can perform name recognition in real time with up to 50 callers entered on a caller list. With more than 50 callers there may be a delay of several seconds between the time a caller says his/her name and the instant at which the present invention establishes the his/her identity. However for optimal recognition, the user is advised to begin with 20 callers or fewer, whose names the user trains by microphone.

As calls are received from callers in this initial group, the present invention's name recognition becomes more robust, and quick improvements in recognition accuracy should become apparent. Then the user is advised to add callers gradually over the first several weeks of use, up to the recommended limit of 50.

The rate of recognition accuracy is the ratio, expressed as a percentage, of the number of spoken names recognized correctly, relative to the number of names fully pronounced. There are three types of possible errors: confusion, wrong acceptance and wrong rejection. As an example: there are two names on the list--- Bob and Tom---and there are 40 calls from Bob, 40 calls from Tom and 20 calls from unknown callers. The recognition errors are: (1) Confusion: Bob as Tom - two times, Tom as Bob - once; (2) Wrong acceptance: Unknown names - once as Bob, twice as Tom; (3) Wrong rejections: Bob rejected five times, Tom - three times. The sum of errors is 14. The recognition accuracy is 86%. For security reasons, a strategy which aims to minimize the first two types of errors is employed in the present invention. So when the system is said to produce, for instance, 90% accuracy, this means that confusion and wrong acceptance errors are close to 0% and nearly all the 10% of calls categorized as errors are calls in which incorrect rejection has occurred.

Recognition accuracy varies according to a number of factors, including telephone line conditions and the clarity of pronunciation by callers. But, if used as instructed over standard U.S. phone lines, the present invention should produce rates of recognition accuracy similar among most users. With an initial Caller List containing 20 callers, for example, with all names trained by microphone only, accuracy rates should generally fall in the 50-60 percent range. That's to say that first-time callers should be successfully recognized slightly more than half the time. In cases where a caller is not recognized, he/she will be identified as an "Unknown Caller."

The present invention utilizes an auto-training algorithm that aims to select the best samples of spoken caller names after their semi-automatic collection. These samples are then used to create a set of speaker dependent telephone name patterns for telephone-based recognition. The main advantages of applying the auto-training algorithm are to avoid the destruction of the name pattern through an erroneous insertion into the training set of an incorrect sample and to include in the training set only those samples which are statistically the most significant.

As an example, let two sets of recorded samples of caller names (first and last) be collected - $\{F_1, F_2, \ldots, F_N\}$ and $\{L_1, L_2, \ldots, L_N\}$, where N= number of calls made by the caller in question.

The auto-training algorithm goes through the following stages:

Stage 1. Adds new samples to the sets. If $N=1$, $2$ or 3 the patterns for each name are trained by using only one (the last) sample within standard procedure.

Stage 2. If $N \geq 4$ the automatic training procedure starts.

Two distance square matrices are calculated- $D_F$ and $D_L$.

$$D_F = \begin{bmatrix} D_{11} & D_{12} & \ldots & D_{1N} \\ D_{21} & D_{22} & \ldots & D_{2N} \\ \ldots & \ldots & \ldots & \ldots \\ D_{N1} & \ldots & \ldots & D_{NN} \end{bmatrix},$$

where $D_{kl} = dist(F_k, F_l)$, which is calculated using dynamic programming for first name samples $k$ and $l$;

$$D_L = \begin{bmatrix} D_{11} & D_{12} & \dots & D_{1N} \\ D_{21} & D_{22} & \dots & D_{2N} \\ \dots & \dots & \dots & \dots \\ D_{N1} & \dots & \dots & D_{NN} \end{bmatrix},$$

where $D_{kl} = dist(L_k, L_l)$, which is calculated using dynamic programming for last name samples $k$ and $l$.

A special transformer is applied for each matrix according to

$$D_{kl} = \begin{cases} 2D_{kl} - D_{lk}, & D_{kl} \geq D_{lk}, l \leq k \\ 2D_{lk} - D_{kl}, & D_{kl} \leq D_{lk}, l \leq k, \\ 0, & l > k \end{cases} \qquad 1 \leq l, k \leq N$$

$N$ special subsets are formed for each matrix according to
$D^k = (D_{1k}, D_{2k} \dots D_{kk}, \dots D_{kN}\}$, $1 \leq k \leq N$
Elements of each subset $D^k = (d_1, d_2, \dots d_N\}$, $1 \leq k \leq N$ are sorted in ascending order, and medians are defined.
$D_{med}^{k} = d_{[N/2]}$, where $d_1 \leq d_2 \dots \leq d_{[N,2]} \dots \leq d_N$
For each matrix a set of medians emerges
$D^{med} = \{D_{med}^{1}, D_{med}^{2}, \dots, D_{med}^{N}\}$, $1 \leq k \leq N$
and among these global median can be found
$Med = D_{med}^{[N/2]}$, where $D_{med}^{1} \leq D_{med}^{2} \dots \leq D_{med}^{[N/2]} \leq D_{med}^{N}$
A similar procedure is performed to define the robust dispersion
$Disp = D_{disp}^{[N/2]}$, where $D_{disp}^{1} \leq D_{disp}^{2} \dots \leq D_{disp}^{[N/2]} \dots \leq D_{disp}^{N}$, $D_{disp}^{k}$ is a dispersion for the subset $k$.

Stage 3. For first names and last names training sequences are formed, which contain pairs of samples $k$ and $l$ satisfying
$D_{kl} \leq (Med + \alpha Disp)$,
where $\alpha = 1.1 \div 1.5$
Stage 4. *If $N>15$* a sample which produces the biggest distance with trained pattern is deleted.

As part of the experimentation, two types of speech signal analysis were investigated: formant analysis and spectral analysis. The formant analysis aims at the extraction from speech signal of the formant parameters F1, F2 (formant frequencies) and A1, A2 (formant amplitudes) as a function of time. The spectral analysis aims at measuring amplitude-frequency spectrum with a certain number of frequency channels (16, 24 or more) as a function of time. For both types of the analysis, a certain normalization procedure is carried out in order to compensate for different kinds of speakers' voice variations.

The formant analysis is based on amplitude-frequency measurement of the signals from the outputs of 4 first-order digital filters. An output signal Y(j, i) from the j-th filter in the i-th time-discrete is defined as:

$$Y(j,i) = \frac{2^*F_h(j)}{F_d} \sum_{k=1}^{Fd/Fh(j)} \{X(i-k) + X(i+k)\} - \frac{2^*F_l(j)}{F_d} \sum_{k=1}^{Fd/Fl(j)} \{X(i-k) + X(i+k)\},$$

where X(i-k), X(i+k) - speech signal samples at the i-k -th and i+k -th time-discrete; Fd - frequency of discretization; $F_h$(j), $F_l$(j) - high and low frequencies of the j-th filter.

For Fd = 10 kHz the values of $F_h$(j), $F_l$(j) are shown in Table 1 below. The outputs of each filter are analyzed step by step within a frame of 256 time-discrete (25.6 ms) with the 128 time-discrete (12.8 ms) overlaps.

TABLE 1

| Filter Frequencies (Hz) | |
|---|---|
| low | high |
| 312 | 625 |
| 625 | 1250 |
| 1250 | 2500 |
| 2500 | 5000 |

The mean amplitudes of outputs signals are calculated:

$$A(n,j)=\frac{1}{I}\sum_{i=1}^{I} Y(j,i),$$

where A(n, j) is the mean amplitude of the j-th filter output signal at the n-th frame; I=128 is the duration of frames in the time-discrete.

The next step is the measurement of filter output signal frequencies $F^z(n, j)$ : $F^z(n, j) = \frac{F_d}{I} * Z(n, j)$, where Z (n, j) is the number of signal zero-crossing for the j-th filter at the n-th frame.

Formant frequencies for each time frame F1(n), F2(n) are found from the formulas:

$$F1(n) = \frac{A(n,1)*F^z(n,1)+A(n,2)*F^z(n,2)}{A(n,1)+A(n,2)};$$

$$F2(n) = \frac{A(n,3)*F^z(n,3)+A(n,4)*F^z(n,4)}{A(n,3)+A(n,4)}.$$

Formant frequencies are then subject to normalization in accordance with the formula:

$$F_p^N(n)=\frac{F_p(n)-F_p^{min}}{F_p^{max}-F_p^{min}},$$

where $F_p^{max}$, $F_p^{min}$ are the maximum and the minimum values of the p-th formant frequency, which is found experimentally.

Formant amplitudes A1(n), A2(n) are found from the formulas:

$$A1(n) = A(n,1) * \left\{1-F_1^N(n)\right\} + A(n,2) * F_1^N(n);$$

$$A2(n) = A(n,3) * \left\{1-F_2^N(n)\right\} + A(n,4) * F_2^N(n).$$

Formant amplitudes are then subject to normalization according to the formula:

$$A_p^N(n) = A_p(n) \Big/ \max_{p=1,2} \left\{A_p(n)\right\},$$

where the maximum value of the amplitudes A1(n), A2(n) is calculated at the time-interval n - 16 < T < n + 16.

The formulas

$$F_p^N(n) = \frac{F_p(n) - F_p^{min}}{F_p^{max} - F_p^{min}},$$

and

$$A_p^N(n) = A_p(n) \Big/ \max_{p=1,2} \left\{A_p(n)\right\}$$

give the first 4 formant parameters from the whole set of 8 parameters. The next 4 parameters are found from the former parameters using the formulas:

$$dF_p(n) = \frac{1}{2^*K_f} \sum_{k=1}^{K_f} \left\{F_p^N(n+k) - F_p^N(n-k)\right\} + 0.5;$$

$$dA_p(n) = \frac{1}{2^*K_a} \sum_{k=1}^{K_a} \left\{A_p^N(n+k) - A_p^N(n-k)\right\} + 0.5.$$

The above parameters are kind of integral derivatives of the other parameters. $K_f$ and $K_a$ are the number of the integrated frames: $K_f$=4, $K_a$ =2.

As a result of formant speech signal analysis, each n-th frame is described by a vector of the following eight speech signal parameters:

$$\overline{S(n)} = \{ F_1^N(n), F_2^N(n), A_1^N(n), A_2^N(n), dF_1(n), dF_2(n), dA_1(n), dA_2(n)\},$$

which have been calculated from prior formulas. This vector is called the set of formant parameters.

The spectral analysis is based on a bank of 24 second-order band-pass filters in the frequency range of 250 - 5000 Hz. The filters work in accordance with the equation:

$$Y(j,i) = \{2^*Y(j, i-1) - X(i-1)\}^* K_1(j) - Y(j,i-2)^* K_2(j) + X(i),$$

where Y(j, i), Y(j, i - 1), Y(j, i - 2) are output signals of the j-th filter at the i-th, (i-1)-st, (i-2)-nd time-discrete; X(i), X(i - 1) are speech signal samples at the i-th and (i-1)-st time-discrete; $K_1$(j), $K_2$(j) are coefficients defined from the central frequency and the bandwidth of the filters according to the formulas:

$$K_1(j) = \left(1 - \pi * B(j) / F_d\right) * \cos\left(2 * \pi * F^c(j) / F_d\right);$$

$$K_2(j)=(1-\pi*B(j)/F_d)^2,$$

where $F_d$ = 10000 Hz is the frequency of discretization

The outputs of each filter are then analyzed step by step within a frame of 256 time-discretes (25.6 ms) with the 128 time-discrete (12.8 ms) overlaps. The spectral components are defined as follows:

$$A(n,j)=\frac{1}{N}*\sum_{i=1}^{N}\left|Y(j,i)-0{,}5*Y(j-1,i)-0{,}5*Y(j+1,i)\right|,$$

where A(n, j) is the value of the j-th spectral component for the n-th time-frame; Y(j, i), Y(j-1, i), Y(j+1, i) are defined from (3.13); N=256 is the duration of frames in the time-discrete. Subtractions in the above formula are used to steepen filter characteristics, which explains why the total number of filters is not 24 but 26.

Finally, for each j-th filter (j=1,...,24) and each n-th time frame the obtained spectra are normalized in order to eliminate amplitude-frequency distortions according to the formula:

$$A^N(n,j)=\begin{Bmatrix}\frac{1}{16}\left[\sum_{k=n-1}^{n+1}\sum_{i=j-1}^{j+1}Sgn\{A(n,j)-A(k,i)\}+8\right] & ,\text{if} \quad A(n,j)>P_S \\ 0 & ,\text{if} \quad A(n,j)<P_S\end{Bmatrix},$$

where $P_S$ is the threshold -whose value depends on the noise level.

As a result of spectral based speech signal analysis described above, 24 speech signal parameters are obtained, which are expressed according to the above formula. These are referred to as the set of spectral parameters:

$$\overline{S(n)}=\{A^N(n,j)\},$$

where j varies from 1 to 24.

For the recognition testing 532 sentences pronounced by 4 speakers were used: 120 for speaker AC, 144 - for DP, 131 - for GR, 137 - for PM. The number of words in phrases is 5 and whole number of different words is 21. For the word patterns creation we used 8 samples of each word for each speaker. The results of the testing is shown in table 2 for formant parameters and in table 3 for spectral parameters. In both tables results of testing are shown when personal patterns and general patterns were used for speech recognition. Two types of percentages of correct recognized phrases are represented: when recognized phrase is the first among 8-best candidates; and when recognized phrase is not the first but belongs to the 8-best.

TABLE 2

| SPEAKER | PERSONAL PATTERNS | | GENERAL PATTERNS | |
|---|---|---|---|---|
| | 1-st correct | in N-best | 1-st correct | in N-best |
| **AC** | 95 | 100 | 82 | 100 |
| **DP** | 92 | 100 | 77 | 99 |
| **GR** | 98 | 100 | 75 | 97 |
| **PM** | 96 | 100 | 67 | 97 |

TABLE 3

| SPEAKER | PERSONAL PATTERNS | | GENERAL PATTERNS | |
|---|---|---|---|---|
| | 1-st correct | in N-best | 1-st correct | in N-best |
| **AC** | 95 | 96 | 45 | 87 |
| **DP** | 96 | 100 | 50 | 92 |
| **GR** | 87 | 95 | 41 | 89 |
| **PM** | 89 | 98 | 23 | 72 |

As indicated from tables 2 and 3 the results obtained from the testing of two speech analysis models showed there capacity for speech recognition. The formant analysis is more suitable for speaker independent speech recognition tasks while spectral analysis - for speaker dependent recognition.

The training procedure is used for the creation of word patterns. The purpose of the training procedure is to find the values of the pattern parameters by statistically analyzing the acoustic properties of the words which have been pronounced K times by different speakers. The training procedure goes through the following stages: nonlinear normalization of time scales of the words used for training by using Dynamic Time Warping technique; choice of the best sample for time scale normalization which gives the most compact distribution for the whole of K samples and is located in the center of samples distribution; determination of word pattern parameters by calculation of statistical parameters of samples distribution called the centers of gravity.

Let K be the number of samples of each word from the given dictionary used for the training, and use the k-th sample of the word from K. By using the known Dynamic Time Warping technique find the optimal non-linear time correspondence between the k-th sample of the word and all the other K-1 samples. As a result there is the same number of time-frames $N_k$ for each of K-1 sample as for the k-th sample.

Using this procedure re-compute the vector values of each n-th time-frame for each of the K-1 training words. If the n-th frame corresponds to only one m-th frame (n=0;1;8), then take this vector with no change. If more than one n-th frame corresponds to one and the same m-th frame (n=2,3;4,5,6), then combine the n-th frames into one frame with the mean value of these vectors. If an n-th frame corresponds to more than one m-th frames (n=7), then add an additional n-th frame with the same values. After carrying out this procedure we come to the same number $N_k$ of time-frames m for all of the K words we have been using for training.

Using one or another of the k-th samples from K as a basis for time-scale normalization will potentially obtain K possible bases for the pattern of the word with a different number of time frame $M_k$. The sample which gives the most compact distribution for the whole of K and is located in the center of samples distribution is assumed to be the best one. The minimum of the distribution radius $R^k$, which is defined below, can serve as a criterion for this choice.

Taking one of the k-th sample from K as a basis for time-scale normalization compute, first, the square matrix of mutual distances between all K words $[R^k]$ used for training:

$$R^k(i,j) = \frac{1}{N_k}\frac{1}{P}\sum_{j=1}^{N_k}\sum_{p=1}^{P}\left|S_i(p,n)-S_j(p,n)\right|,$$

where $N_k$ is the number of time-frames; P is the number of vector-components; $S_i$ (p, n) and $S_j$ (p, n) are, respectively, the values of the p-th vector-component at the n-th time-frame for the i-th and the j-th word.

For each line of the matrix find the maximum distance line matrix:

$$R^k_{max}(i) = \max_{j=1-K}\left\{R^k(i,j)\right\}.$$

From the line matrix the minimal distance value is then found:

$$R_c^k = \min_{n=1-K} \left\{ R_{max}^k(n) \right\},$$

where $R_c^k$ is the radius of K samples distribution and c is the center of the distribution.

By testing in a similar way different samples from K and measuring $R_c^k$ as described above find the best sample for time-scale normalization:

$$c = \arg\min_k R_c^k .$$

The above considerations are illustrated for the case of $s_i(p,n)$ being a two- dimensional vector.

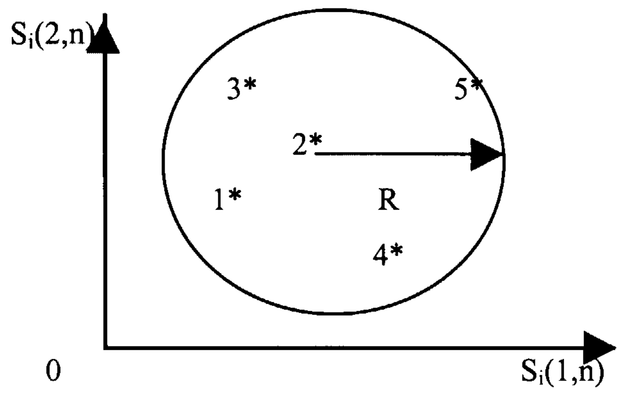


a)

| | 1 | 2 | 3 | 4 | 5 | $R_{max}(i)$ |
|---|---|---|---|---|---|---|
| 1 | 0 | 25 | 40 | 30 | 50 | 50 |
| 2 | 25 | 0 | 20 | 25 | 25 | 25 |
| 3 | 40 | 20 | 0 | 40 | 35 | 40 |
| 4 | 30 | 25 | 40 | 0 | 25 | 40 |
| 5 | 50 | 25 | 35 | 25 | 0 | 50 |
| | | | | | R= | 25 |

b)

**TABLE 4** - Radius of the distribution of training samples (a) and distance matrixes (b)

Each word pattern is described by the following parameters:

C(p, n) - the mean value of the p-th speech-parameter at the n-th time frame (formant or spectral) for K training samples;
$G^-(p, n)$ and $G^+(p, n)$ - left and right deflections from C(p, n);
t - the mean value of word pattern duration in the time frames;
$t^-$, $t^+$ - left and right deflections from t.

Using the best sample for time-scale normalization we can transform all K samples of the word into the new samples with the same number $N_c$ of time frames. Now, each p-th vector component in the n-th time frame is represented as a random value S(p, n) for each of the K samples.

The commonly known way of finding word pattern parameters is approachable only if the number of word samples designed for the training is statistically sufficient. In a case when the number of samples is limited we propose to use the following procedures for the calculation of word-pattern parameters. For each n-th time-frame and for each p-th vector component S(p, n) we calculate the following statistical parameters of samples distribution called the centers of gravity (CG):

$$CG(p,n) = \frac{\sum_{v=a}^{b}\left(W_v(p,n)*v\right)}{\sum_{v=a}^{b} W_v(p,n)},$$

where v is the number of the discrete value of vector components: v=0,1,...255; $W_v(p,n)$ is the number of the word training-samples in the n-th time-frame for the p-th vector-component which has the value S(p, n) = v; a, b are the boundaries of finding CG

Parameters a and b define three types of CG:

- $Cg_c(p, n)$ - center of the distribution C(p, n), calculated for a=0 and b=1;
- $Cg_l(p, n)$ - left deflection from the center $G^-(p, n)$, for a=0 and $b=CG_c(p, n)$;
- $Cg_r(p, n)$ - right deflection from the center $G^+(p, n)$, for $a=CG_c(p,n)$ and b=1.

Proceeding in the same way, $Cg_c(p, n)$ gives an estimate of the mean value of the parameter S(p, n) and $[Cg_r(p, n) - Cg_l(p, n)]$ - represent the dispersion of the parameter S(p, n). The determination of the mean value of the parameter and its dispersion for the number of training samples K=12 is illustrated in Table 5.

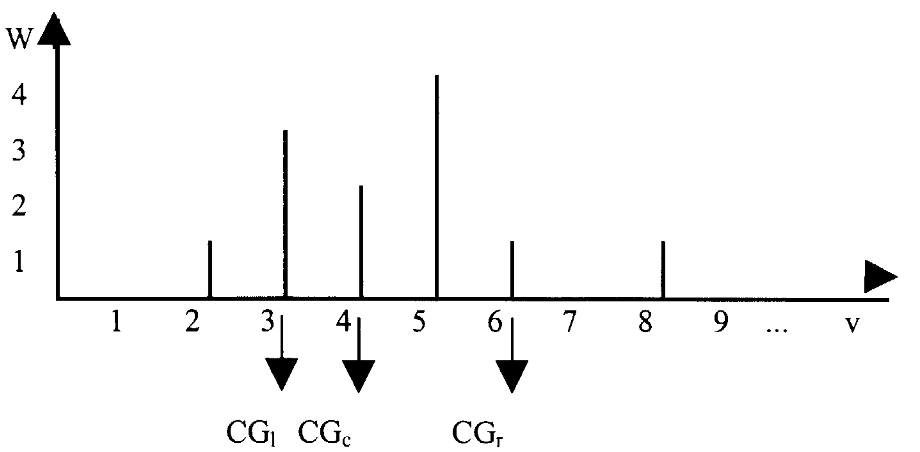


**TABLE 5** - Determination of C(p, n), $G^-(p, n)$, $G^+(p, n)$ by measuring centers of gravity of the distribution:

$Cg_c(p, n) = (1*2+3*3+2*4+4*5+1*6+1*8)/(1+3+2+4+1+1) = 4$

$Cg_l(p, n) = (1*2+3*3)/(1+3) = 3$

$Cg_r(p, n) = (4*5+1*6+1*8)/(4+1+1) = 6$

Finally, determine time parameters of the word-pattern:

$$t = N_c;$$

$$t^- = \min_{k=1-K} \{N_k\};$$

$$t^+ = \max_{k=1-K} \{N_k\},$$

where $N_c$ is the duration of the training sample corresponding to the pattern center; K is the number of the training samples; $N_k$ is the duration of the k-th training sample.

Using the procedure described above determine the full set of word-pattern parameters E:

$$\bar{\bar{E}}=\{\ \overline{E(p,n)},t,t^-,t^+\},$$

where

$$\overline{E(p,n)} = \{\overline{C(p,n)},\ \overline{G^-(p,n)},\ \overline{G^+(P,n)}\}.$$

The first step in the creation of word-patterns is an extraction of sufficient number of samples for each of the word existing in different phrases intended for recognition. Obviously, this extraction would be possible made manually but for the large vocabulary and in a case of many different word-position in phrases it is a very hard job which might take a lot of time. To avoid this difficulty use an algorithm of automatic word-samples extraction from the running speech and the collection for the creation of word-patterns.

Take the phrase in which the positions of each word are manually labeled. For the same phrase but spoken by another speaker, then the problem is how to transfer the words labels from the first phrase to the second one. This problem might be solved by the MDTW-technique. By using the MDTW the optimal way of non-linear time corespondents between two phrases is found. This gives the co-ordinates of the points of optimal conformity of two phrases and among them the labels for the boundaries of the words.

The procedure of automatic word-samples extraction from the running speech and the collection for the creation of word-patterns is organized as follows. First, extract from all of existing phrases one sample of each word from a full set of the different words (vocabulary). Then, having such samples, combine them by using any of the existing phrases. Such artificially constructed phrase with already known boundaries of the words is used for training.

Unlike the Hidden Markov Model (HMM) algorithm, which has been one of the most commonly used so far, the proposed model of speech recognition is based on the modified dynamic programming method, termed Start-Point Free Dynamic Time Warping (SPF DTW). Although the algorithm was developed a long time ago, it has never been commonly used because it seemed to be too complicated. With the modern computation equipment it can now be successfully integrated. The main advantage of the SPF DTW is that it not only gives an evaluation of word presence in running speech but also evaluates the time of its beginning and end.

The initial problem is how to compute the function of the running distance - L(n, m) between n-th vector-parameters - $\overline{S(n)}$ of the spoken word and m-th patterns - $\overline{E(m)}$, and second, how to compute the current duration - T (n, m) of the spoken word in the running speech. Here - N is the real-time frames number.

Let assume that for real-time n-1 and pattern-time m the values L(n-1, m) and T(n-1, m) are known. Let $\overline{S(n)}$ is a new sample of the spoken word vector-parameters. The new values of L(n, m) and T(n, m) are calculated for each m-th time frame of pattern beginning from m = 0 using the values - L(n-1, m) and T(n-1, m). Let take

$$L(n,0) = D\{\overline{S(n)};\ \overline{E(0)}\};\ T(n,0) = 0.$$

Then

$$L(n,m) = D\{\overline{S(n)}\ ;\ \overline{E(m)}\} + \min\{V1;V2;V3\},$$

where

$$D\{\overline{S(n)};\ \overline{E(m)}\} = \frac{1}{P}\sum_{p=1}^{P} d\{S(p,n);E(p,m)\},$$

where

$$d\{S(p,n);E(p,m)\} = \begin{cases} S(p,n)-G^{+}(p,m) & \text{if} \quad S(p,n)>G^{+}(p,m) \\ G^{-}(p,m)-S(p,n) & \text{if} \quad S(p,n)<G^{-}(p,m) \\ 0 & \text{if} \quad G^{-}(p,m)\leq S(p,n)\leq G^{+}(p,m) \end{cases}$$

$$V1 = L(n\text{-}1,m)+D\{m;T(n\text{-}1,m)\};$$

$$V2 = L(n, m\text{-}1)+D\{m\text{-} 1;T(n,m\text{-}1)\};$$

$$V3 = L(n\text{-}1, m\text{-}1) + D\{m\text{-}1; T(n\text{-}1, m\text{-}1) \}.$$

$$T(n,m) = \begin{cases} T(n-1,m) & \text{if} \quad \min\{V1;V2;V3\} = V1 \\ T(n,m-1)+1 & \text{if} \quad \min\{V1;V2;V3\} = V2, \\ T(n-1,m-1)+1 & \text{if} \quad \min\{V1;V2;V3\} = V3 \end{cases}$$

where $D\{\overline{S(n)}\ ;\ \overline{E(m)}\}$ - is distance between parameter-vectors of the spoken word at the n-th time frame and pattern at the m-th time frame; P - number of the vector-components (formant or spectral description); d{ S(p, n); E(p, m)} - is distance between values of the p-th parameter of the spoken word at the n-th time frame and p-th parameter of the pattern at the m-th time frame.

The functions L(n, M), T(n, M), where M - is the last time-frame of the word pattern, are used for spoken words recognition.

In order to recognized the q-th spoken word in running speech first find the co-ordinates of minimum of the function $L_q(n, M)$:

$$D_q = \min_q \quad L_q(n,M);$$

$$P_q^e = \arg\min_q \quad L_q(n,M),$$

where $D_q$ - the evaluation of the integral distance between speech signal parameters of the spoken word and word pattern; $P_q^e$ - is a possible end-point position of the word; M - is the last time-frame of the word pattern.

Once $P_q^e$ is known, then determine the evaluation of the spoken word duration $T_q$ and begin-point position of the word $p_q^b$:

$$t_q = T_q\ (P^e_q\ ,M)\ ;$$

$$P^b_q = P^e_q - t_q.$$

This value $t_q$ is necessary for an evaluation of the distance $D^t_q$ between time-duration of the spoken word and duration the word-pattern given by statistical parameters t, $t^-$, $t^+$ [1]. The $D^t_q$ is finding then as follows:

$$D^t_q = \begin{cases} t_q - t^+ & \text{if} \quad t_q > t^+ \\ t^- - t_q & \text{if} \quad t_q < t^- \\ 0 & \text{if} \quad t^- \le t_q \le t^+ \end{cases}.$$

The combined evaluation of integral-distance $D^c_q$ between speech signal of the spoken word and k-th word pattern is finding as

$$D^c_q = \alpha * D_q + \beta * D^t_q\ ,$$

where $\alpha,\beta$ are weights coefficients and $\alpha+\beta = 1$.

To make the decision about of what word was spoken from Q word-patterns find

$$q = \underset{q = 1-Q}{\arg\min}\ D^c_q.$$

Let a spoken phrase consist of the same number K of word-sequence:

$$W_1,\ldots,W_k,\ldots,W_K,$$

where - k is an order number of the word in a phrase which also defines the number of different words - $I_k$ being recognized in this position.

The procedure of word sequences recognition is as the follows. First, starting from the time point n=0 try to find two or more candidates among I1 different words for the first position in a phrase. In other words, find the values of

$$D^c_1\ (1),\ P^b_1\ (1),\ P^e_1\ (1);\ D^c_1\ (2),\ P^b_1\ (2),\ P^e_1\ (2);\ \ldots\ .$$

Then, starting from the time points n= $p^e_1(1)$ and n=$p^e_1(2)$ we are trying to find two or more candidates among $I_2$ different words for the second position in a phrase, i.e. the values of

$$D^c_2\ (1),\ P^b_2\ (1),\ P^e_2\ (1);\ D^c_2\ (2),\ P^b_2\ (2),\ P^e_2\ (2);\ \ldots\ .$$

This process is repeated for each of k-th words in a phrase.

For each branch created, calculate integral distance $D^c_k(i)$ which depends on the mutual distance between the beginning of i-th decision for k-th word - $p^b_k(i)$ and the end of j-th decision for (k-1)-th word - $p^e_{k-1}$ (j) according to the formula:

$$D_k^s(i)=\begin{cases}\{1+\gamma^{ov}*|P_k^b(i)-P_{k-1}^e(j)|\}*D_k^c(i) & \text{if} \quad P_k^b(i)<P_{k-1}^e(j)\\ \{1+\gamma^{sh}*|P_k^b(i)-P_{k-1}^e(j)|\}*D_k^c(i) & \text{if} \quad P_k^b(i)\geq P_{k-1}^e(j)\end{cases},$$

where $\gamma^{ov}$, $\gamma^{sh}$ - are the weight coefficients corresponding the overlapping and shifting. When a tree-like structure of the phrase is found and integral-distances $D_k^s$ are defined for each branch of the tree, proceed with the syntactic filtering of word sequences. To do so, find the shortest way from the top to the bottom of the tree.

The total distance for the r-th way through the tree - $D_r$ is the sum of integral distances of the words:

$$D_r=\frac{1}{K}\sum_{k=1}^{K} D_k^s(i),$$

where $D_k^s$ (i) - the integral distance corresponding to i-th decision for the k-th word; K - total number words at the r-th sequence.

The simplest and exact method to find the shortest way is just to calculate all possible sums $D_r$ (r=1,2,...,R) and then to find

$$r = \arg\min_r D_r,$$

which gives the optimal result of the syntactic filtering of the spoken words sequences. If the number of words-sequences in phrases is not too big (as in our case) and the number of candidates - I would be taken only 2 or 3 (what is practically enough) then this method of the total overview seems to be perfectly reasonable. There are many of different methods to avoid the finding by total overview of the optimal way in a graph (DP-algorithm or HMM for instants) but they are not guarantee to find the best one and would be recommended only for the case with a large K and I.

The foregoing description of the preferred embodiment of the invention has been presented for the purpose of illustration and description. It is not intended to be exhaustive or to limit the invention to the precise form disclosed. The invention is susceptible of many variations and modifications all within the scope of the claims. The preferred embodiment described herein and illustrated in the figures should not be construed as in any way limiting.

## Claims

1. A speech recognition answering system for interacting with a caller, comprising:

   a voice generator for communicating with said caller, wherein said voice generator prompts said caller for a spoken name;
   a voice recorder for recording said spoken name;
   a programmable list of names stored on a memory means, with a programmable set of instructions for said list, a set of speaker dependent patterns for said list, and a set of speaker independent patterns for said list;
   a speaker dependent recognizer for processing said spoken name to produce a set of caller dependent patterns, wherein said set of caller dependent patterns are compared with said set of speaker dependent patterns for identification;
   a speaker independent recognizer for processing said spoken name to produce a set of caller independent patterns, wherein said set of caller independent patterns are compared with said set of speaker independent patterns for identification; and an outgoing call handler for directing said call according to said set of instructions.

2. The speech recognition answering system according to claim 1, further comprising a means of speaker dependent training, wherein said means comprises the steps of selecting an optimal sample from said set of speaker dependent patterns, correcting for an erroneous sample, and adding said caller dependent patterns to said set of speaker dependent patterns upon identification.

3. The speech recognition answering system according to claim 1, further comprising a means of speaker independent training, wherein said means comprises the steps of inputting a name, processing said name to produce a set of name independent patterns, and adding said name independent patterns to said set of speaker independent patterns.

4. The speech recognition answering system according to claim 1, wherein said speaker independent recognizer comprises a voice-independent parameters analyzer, a processing means for producing said caller independent patterns, a storage means for storing said set of speaker independent patterns, a means for comparing said caller independent patterns with said speaker independent patterns, and a means for identifying said caller.

5. The speech recognition answering system according to claim 1, wherein said speaker dependent recognizer comprises a voice-dependent parameters analyzer, a processing means for producing said caller dependent patterns, a storage means for storing said set of speaker dependent patterns, a means for comparing said caller dependent patterns with said speaker dependent patterns, and a means for identifying said caller.

6. The speech recognition answering system according to claim 1, wherein said speaker independent recognizer processes said spoken name using formant analysis and wherein said speaker dependent recognizer processes said spoken name using spectral analysis.

7. The speech recognition answering system according to claim 1, wherein said means for comparing said spoken caller name with speaker dependent patterns is through modified dynamic time warping techniques.

8. The speech recognition answering system according to claim 1, wherein said means for comparing said spoken caller name with speaker independent patterns is through modified dynamic time warping techniques.

9. A speech recognition answering system for interacting with a caller, comprising:

 a voice generator to prompt said caller for a spoken name;
 a means for recording said spoken name;
 a means for recording a caller voice message;
 a call list stored on a memory means, wherein said call list contains caller speech patterns and caller instructions for a plurality of callers;
 a speaker dependent recognizer for comparing said spoken name to a speaker dependent pattern, wherein said speaker dependent pattern is obtained through statistical processing of voice-dependent parameters of said caller speech patterns;
 a speaker independent recognizer for comparing said spoken caller name to a speaker independent pattern, wherein said speaker dependent pattern is obtained through statistical processing of voice-independent parameters of said caller speech patterns;
 a voice player for playing said spoken name and said caller voice message;
 an incoming call voice player which plays a stored voice message to said caller;
 an outgoing call handler for processing said call according to said caller instructions; and
 a system controller for synchronizing and switching.

10. A method of answering calls, comprising the steps:

 accepting a call;
 prompting a caller to input a spoken name;
 recording said spoken name;
 processing said spoken name to produce a set of caller patterns;
 comparing said set of caller patterns to a set of speaker dependent patterns to identify said caller;
 if said caller is not identified, comparing said caller patterns to a set of speaker independent patterns to identify said caller;
 directing said call according to a set of instructions; and
 resetting system when said caller disconnects.

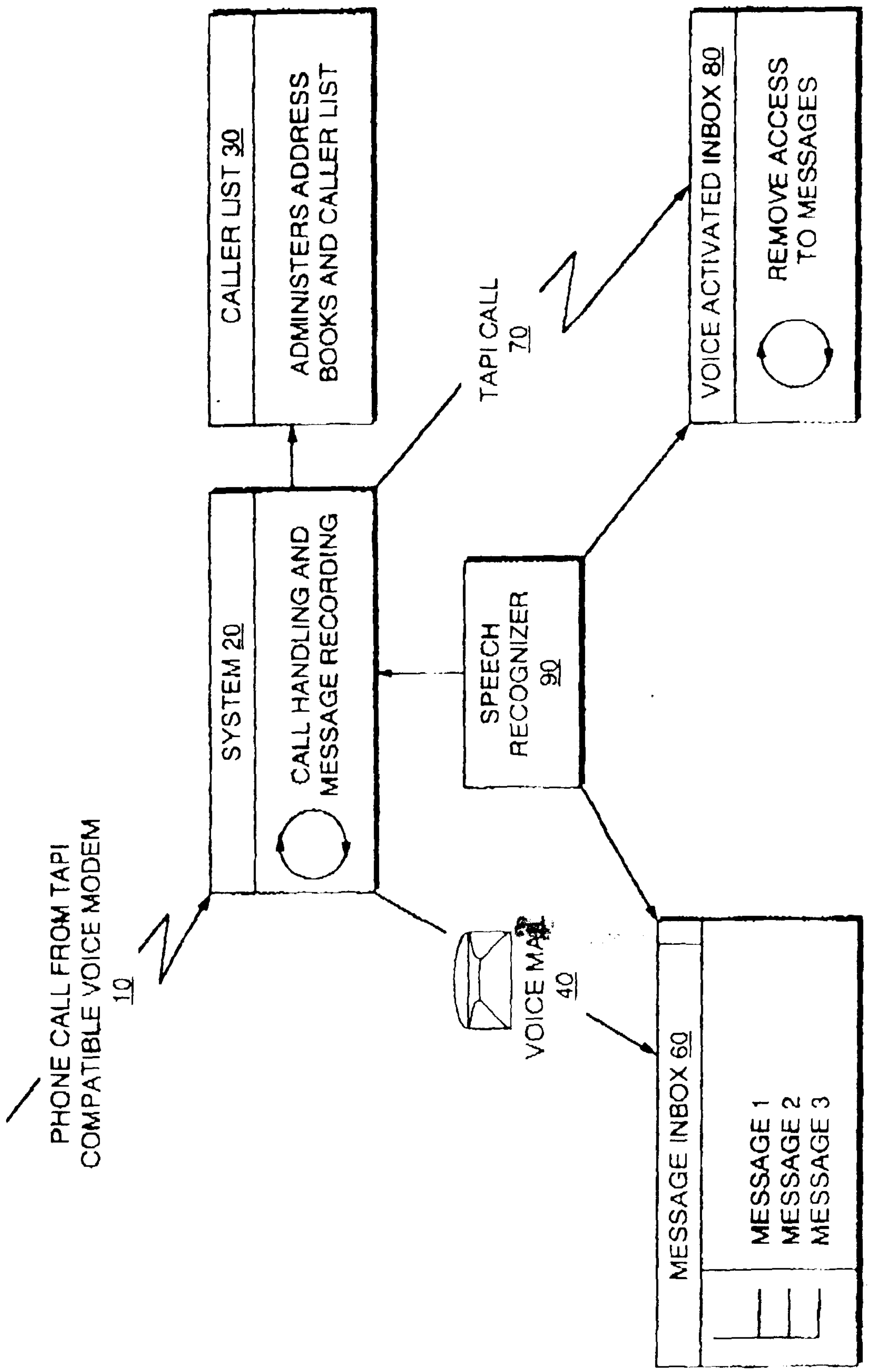
PHONE CALL FROM TAPI COMPATIBLE VOICE MODEM
10
SYSTEM 20
CALL HANDLING AND MESSAGE RECORDING
CALLER LIST 30
ADMINISTERS ADDRESS BOOKS AND CALLER LIST
TAPI CALL
70
VOICE ACTIVATED INBOX 80
REMOVE ACCESS TO MESSAGES
SPEECH RECOGNIZER
90
VOICE MA
40
MESSAGE INBOX 60
MESSAGE 1
MESSAGE 2
MESSAGE 3

FIG. 1

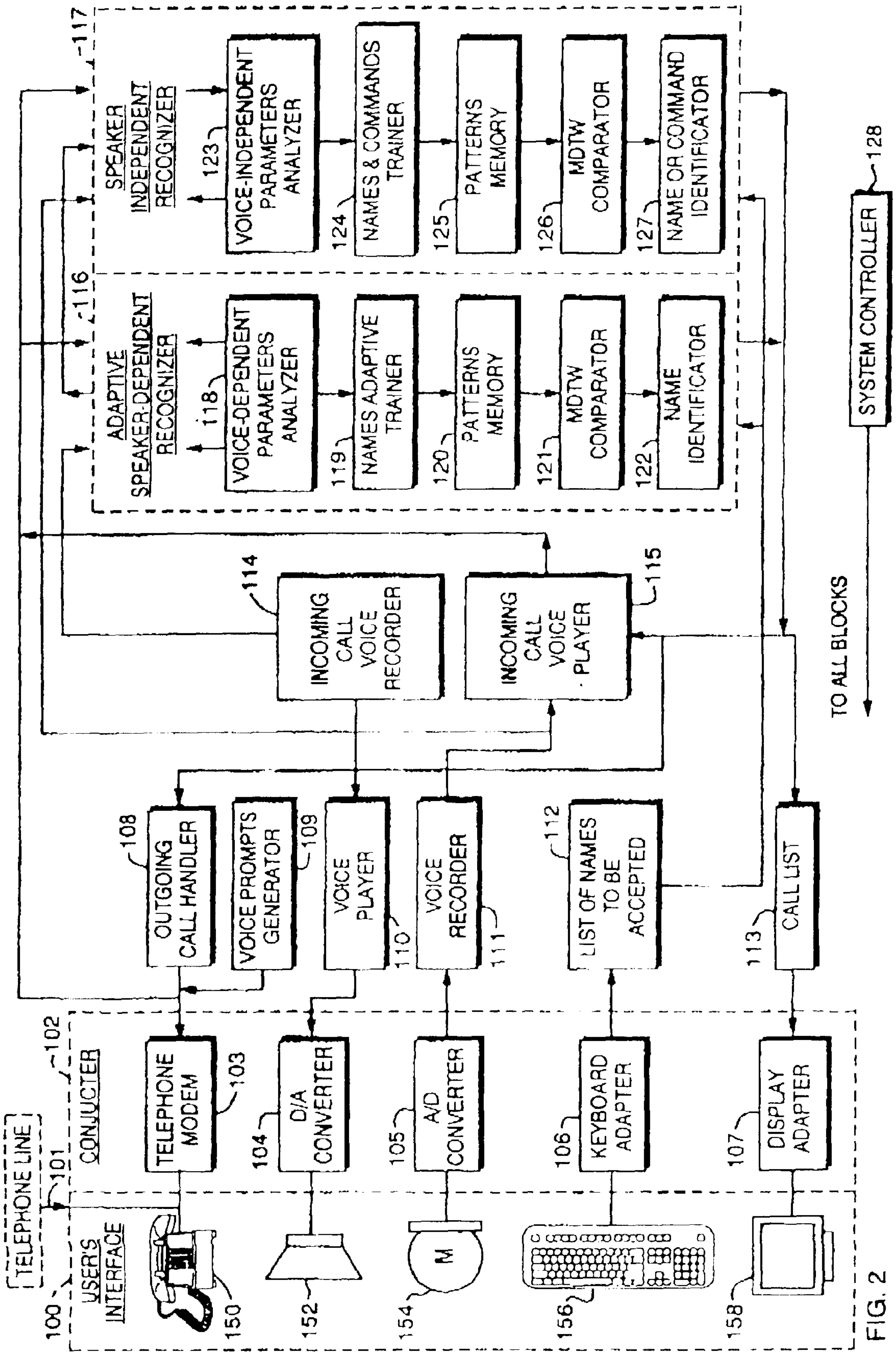
TELEPHONE LINE
101
100
USER'S INTERFACE
150
152
154
M
156
158
CONJUCTER
102
TELEPHONE MODEM
103
104
D/A CONVERTER
105
A/D CONVERTER
106
KEYBOARD ADAPTER
107
DISPLAY ADAPTER
108
OUTGOING CALL HANDLER
VOICE PROMPTS GENERATOR
109
VOICE PLAYER
110
VOICE RECORDER
111
112
LIST OF NAMES TO BE ACCEPTED
113
CALL LIST
114
INCOMING CALL VOICE RECORDER
INCOMING CALL VOICE PLAYER
115
ADAPTIVE SPEAKER-DEPENDENT RECOGNIZER
116
118
VOICE-DEPENDENT PARAMETERS ANALYZER
119
NAMES ADAPTIVE TRAINER
120
PATTERNS MEMORY
121
MDTW COMPARATOR
122
NAME IDENTIFICATOR
SPEAKER INDEPENDENT RECOGNIZER
117
123
VOICE-INDEPENDENT PARAMETERS ANALYZER
124
NAMES & COMMANDS TRAINER
125
PATTERNS MEMORY
126
MDTW COMPARATOR
127
NAME OR COMMAND IDENTIFICATOR
TO ALL BLOCKS
SYSTEM CONTROLLER
128

FIG. 2

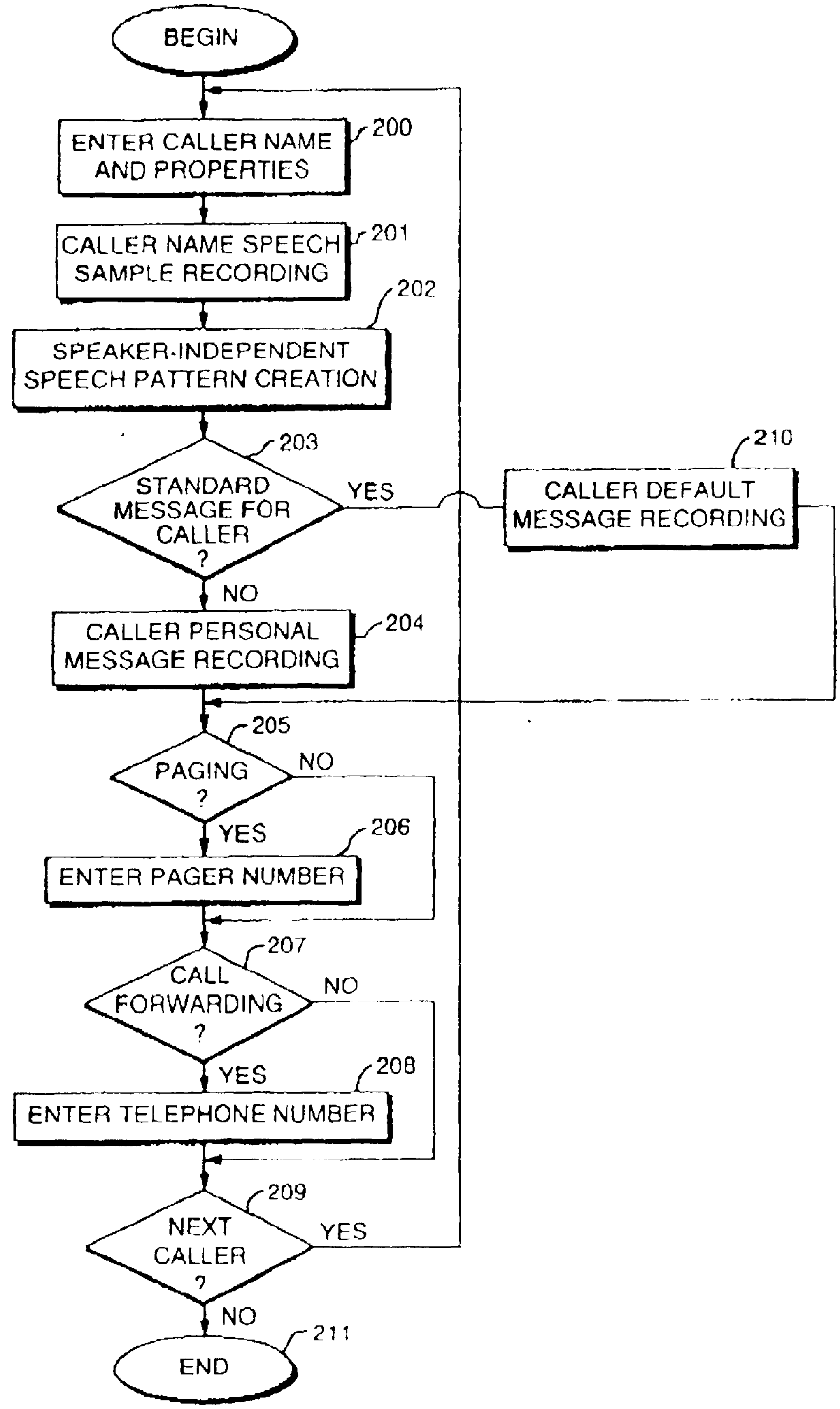
BEGIN
ENTER CALLER NAME AND PROPERTIES
200
CALLER NAME SPEECH SAMPLE RECORDING
201
SPEAKER-INDEPENDENT SPEECH PATTERN CREATION
202
STANDARD MESSAGE FOR CALLER ?
203
YES
CALLER DEFAULT MESSAGE RECORDING
210
NO
CALLER PERSONAL MESSAGE RECORDING
204
PAGING ?
205
NO
YES
ENTER PAGER NUMBER
206
CALL FORWARDING ?
207
NO
YES
ENTER TELEPHONE NUMBER
208
NEXT CALLER ?
209
YES
NO
END
211

FIG. 3

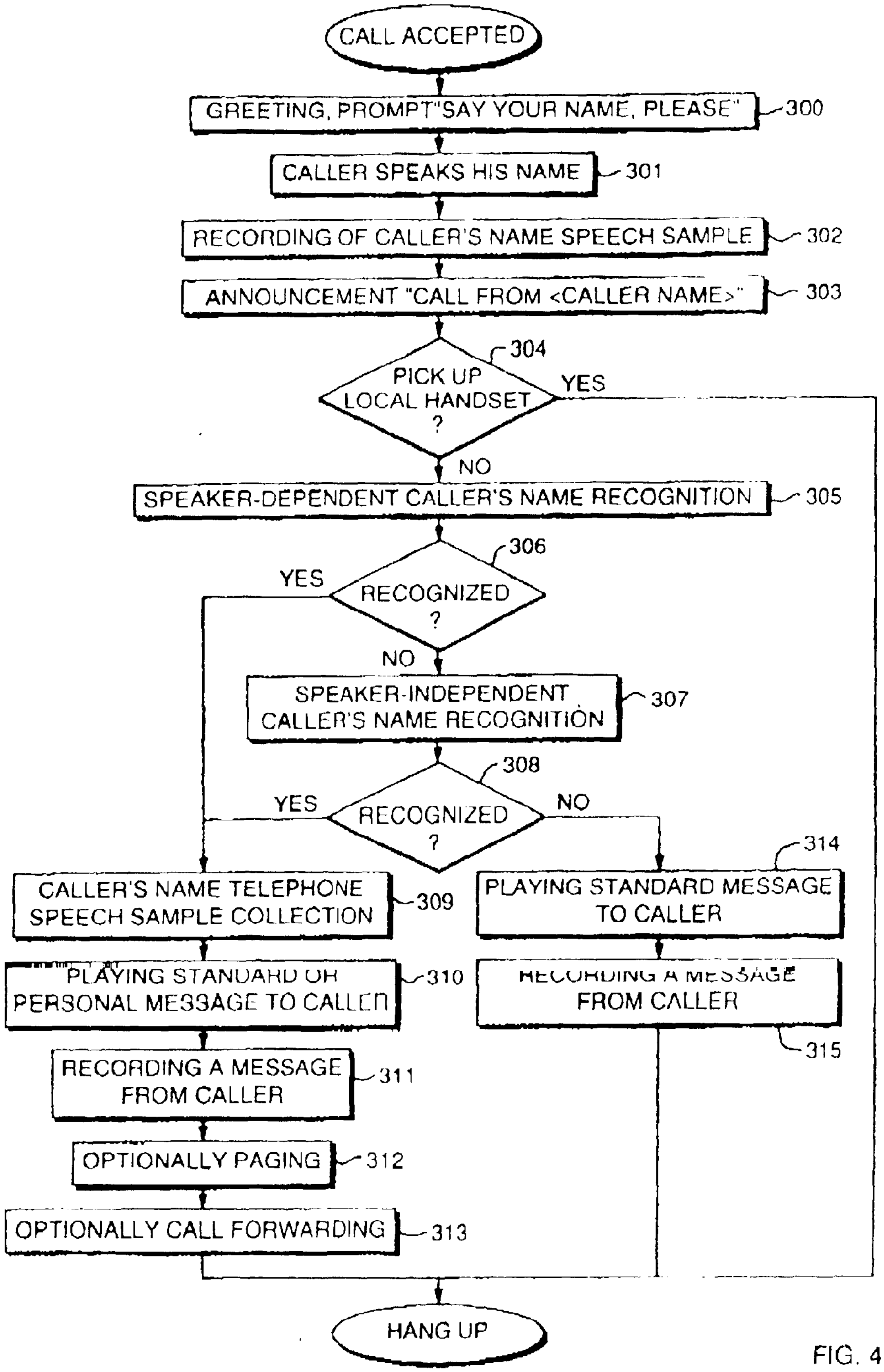
CALL ACCEPTED
GREETING, PROMPT"SAY YOUR NAME, PLEASE"
300
CALLER SPEAKS HIS NAME
301
RECORDING OF CALLER'S NAME SPEECH SAMPLE
302
ANNOUNCEMENT "CALL FROM <CALLER NAME>"
303
304
PICK UP LOCAL HANDSET ?
YES
NO
SPEAKER-DEPENDENT CALLER'S NAME RECOGNITION
305
306
RECOGNIZED ?
YES
NO
SPEAKER-INDEPENDENT CALLER'S NAME RECOGNITION
307
308
RECOGNIZED ?
YES
NO
CALLER'S NAME TELEPHONE SPEECH SAMPLE COLLECTION
309
PLAYING STANDARD MESSAGE TO CALLER
314
PLAYING STANDARD OR PERSONAL MESSAGE TO CALLER
310
RECORDING A MESSAGE FROM CALLER
315
RECORDING A MESSAGE FROM CALLER
311
OPTIONALLY PAGING
312
OPTIONALLY CALL FORWARDING
313
HANG UP

FIG. 4

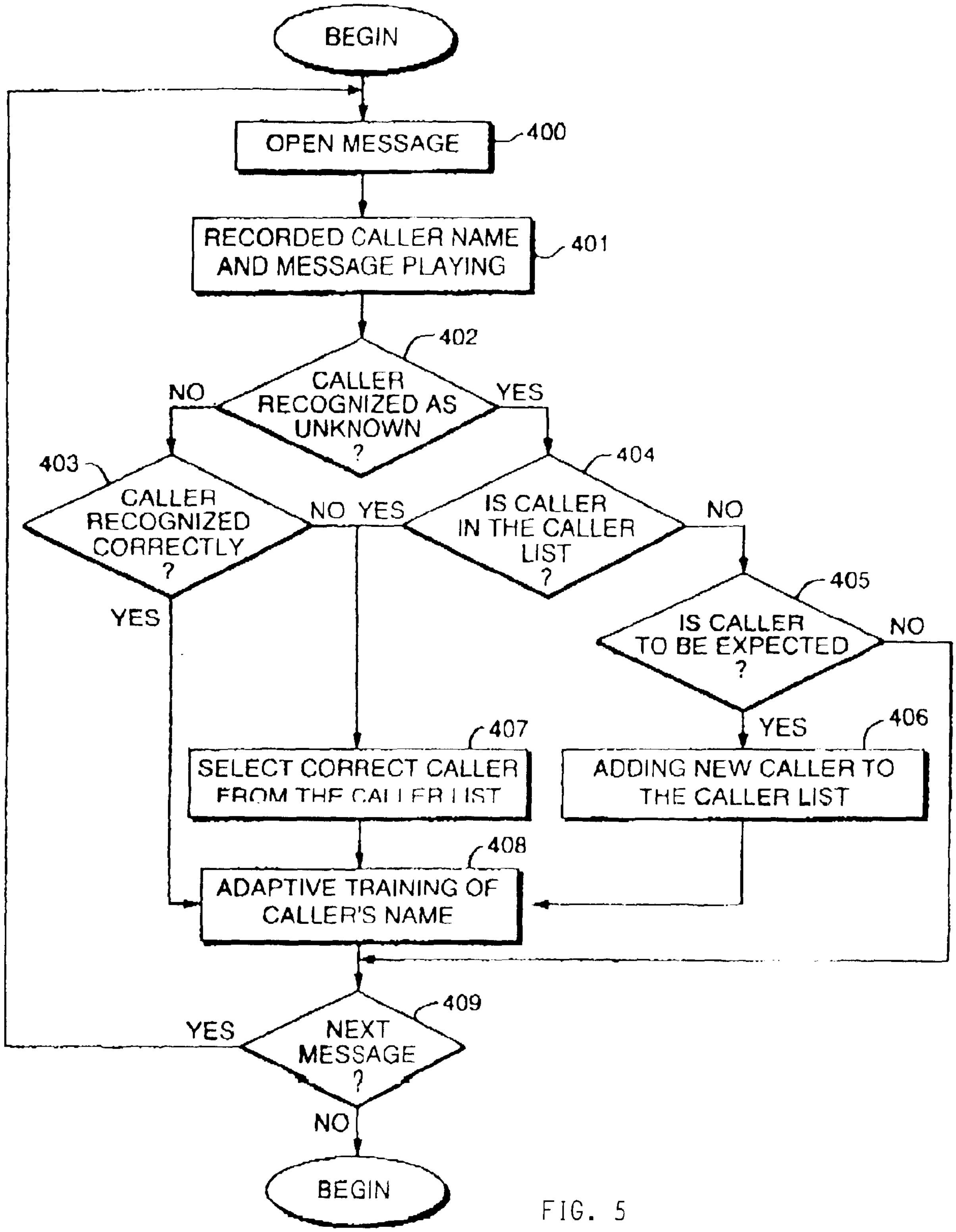
BEGIN
OPEN MESSAGE
400
RECORDED CALLER NAME AND MESSAGE PLAYING
401
CALLER RECOGNIZED AS UNKNOWN ?
402
NO
YES
CALLER RECOGNIZED CORRECTLY ?
403
NO
YES
IS CALLER IN THE CALLER LIST ?
404
NO
IS CALLER TO BE EXPECTED ?
405
NO
YES
SELECT CORRECT CALLER FROM THE CALLER LIST
407
ADDING NEW CALLER TO THE CALLER LIST
406
ADAPTIVE TRAINING OF CALLER'S NAME
408
NEXT MESSAGE ?
409
YES
NO
BEGIN

FIG. 5

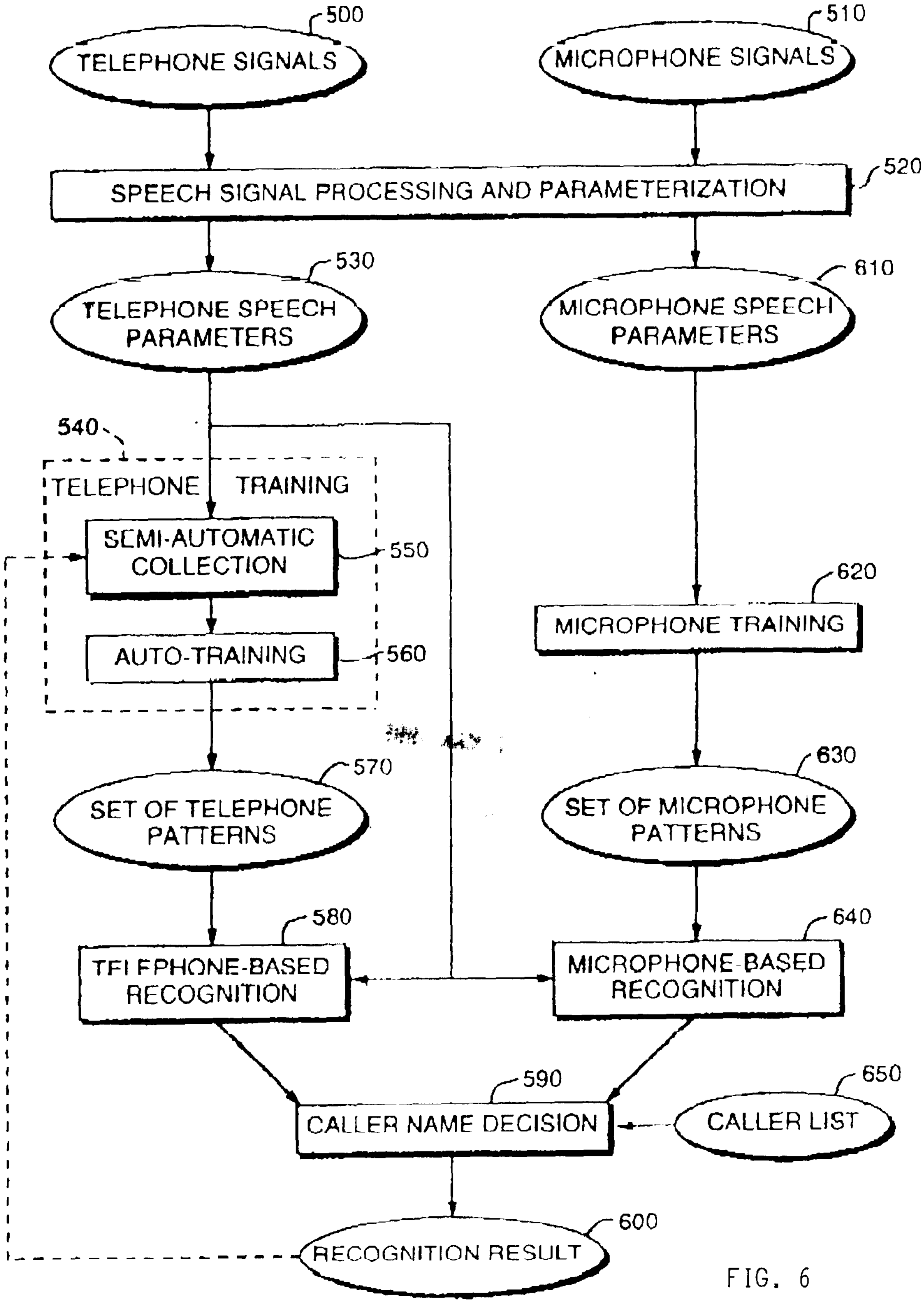
500
TELEPHONE SIGNALS
510
MICROPHONE SIGNALS
520
SPEECH SIGNAL PROCESSING AND PARAMETERIZATION
530
TELEPHONE SPEECH PARAMETERS
610
MICROPHONE SPEECH PARAMETERS
540
TELEPHONE TRAINING
SEMI-AUTOMATIC COLLECTION
550
AUTO-TRAINING
560
620
MICROPHONE TRAINING
570
SET OF TELEPHONE PATTERNS
630
SET OF MICROPHONE PATTERNS
580
TELEPHONE-BASED RECOGNITION
640
MICROPHONE-BASED RECOGNITION
590
CALLER NAME DECISION
650
CALLER LIST
600
RECOGNITION RESULT

FIG. 6